# EUROPEAN PATENT APPLICATION

(11) **EP 4 845 291 A1**
(43) Date of publication of application: **25.11.2026**
(21) Application number: 25751230.1
(22) Date of filing: 22.01.2025
(51) Int. Cl.: H04W 74/0833

(54) **COMMUNICATION METHOD AND RELATED APPARATUS**

(30) Priority: 06.02.2024 CN 202410174822
(71) Applicant: Huawei Technologies Co., Ltd., Shenzhen, Guangdong 518129 (CN)
(72) Inventor: HAN, Chengcheng, Shenzhen, Guangdong 518129 (CN); GUO, Zhiheng, Shenzhen, Guangdong 518129 (CN); LU, Shaozhong, Shenzhen, Guangdong 518129 (CN); HOU, Hailong, Shenzhen, Guangdong 518129 (CN); SONG, Xinghua, Shenzhen, Guangdong 518129 (CN)
(74) Representative: Huawei European IPR
(86) International application number: PCT/CN2025/073880
(87) International publication number: WO 2025/167628

(57) **Abstract**

A communication method and a related apparatus are provided, to reduce latency of a random access procedure. In the method, after a terminal device receives first information indicating a first PRACH resource, the terminal device may send a random access preamble based on N RO resources included in the first PRACH resource. A time domain resource of the first PRACH resource is located in one or more time domain units used for uplink and downlink communication. In other words, the one or more time domain units may be used for both uplink communication and downlink communication. In this manner, the terminal device can send the random access preamble based on the first PRACH resource used for uplink and downlink communication, so that the terminal device can initiate random access in a random access procedure on a resource used for uplink and downlink communication, thereby improving uplink coverage and reducing latency of the random access procedure.

## Description

This application claims priority to Chinese Patent Application No. 202410174822.5, filed with the China National Intellectual Property Administration on February 6, 2024 and entitled "COMMUNICATION METHOD AND RELATED APPARATUS", which is incorporated herein by reference in its entirety.

### TECHNICAL FIELD

This application relates to the field of wireless communication technologies, and in particular, to a communication method and a related apparatus.

### BACKGROUND

Wireless communication may refer to transmission communication performed between two or more communication nodes without propagation by using conductors or cables. The communication nodes generally include a network device and a terminal device.

Currently, in a communication system, the terminal device may perform communication in a time division duplex (time division duplex, TDD) manner. To be specific, the terminal device classifies time domain resources into uplink (uplink, UL) time domain resources and downlink (downlink, DL) time domain resources based on scheduling of the network device. Generally, for the UL time domain resources, the terminal device may send uplink signals but cannot receive downlink signals; and for the DL time domain resources, the terminal device may receive downlink signals but cannot send uplink signals.

However, in a TDD system, downlinks usually occupy most time resources. In this case, because the terminal device performs uplink transmission on a small quantity of time domain resources, poor uplink coverage is easily caused, which also results in an increased communication latency.

### SUMMARY

This application provides a communication method and a related apparatus, to reduce latency of a random access procedure.

A first aspect of this application provides a communication method. The method is performed by a terminal device, the method is performed by a part of components (for example, a processor, a chip, or a chip system) in the terminal device, or the method may be implemented by a logical module or software that can implement all or some functions of the terminal device. In the first aspect and possible implementations of the first aspect, an example in which the communication method is performed by the terminal device is used for description. In the method, the terminal device receives first information, where the first information indicates a first physical random access channel (physical random access channel, PRACH) resource, a time domain resource of the first PRACH resource is located in one or more time domain units used for uplink and downlink communication, the first PRACH resource includes N random access occasion (random access occasion, RO) resources, the N RO resources are RO resources occupied by M mapping cycles (mapping cycles), each mapping cycle is determined based on an association relationship between L synchronization signal/physical broadcast channel blocks (synchronization signal/physical broadcast channel blocks, SSBs or S-SS/PSBCH blocks) and the N RO resources, and L, N, and M are all positive integers; and the terminal device sends a random access preamble (preamble) based on the N RO resources.

Based on the foregoing technical solution, after the terminal device receives the first information indicating the first PRACH resource, the terminal device may send the random access preamble based on the N RO resources included in the first PRACH resource. The time domain resource of the first PRACH resource is located in the one or more time domain units used for uplink and downlink communication. In other words, the one or more time domain units may be used for both uplink communication and downlink communication. In this manner, the terminal device can send the random access preamble based on the first PRACH resource used for uplink and downlink communication, so that the terminal device can initiate random access in a random access procedure on a resource used for uplink and downlink communication, thereby improving uplink coverage and reducing latency of the random access procedure.

In addition, a resource used to send the random access preamble is determined based on at least the N RO resources in the first PRACH resource, and the N RO resources are RO resources occupied by the M mapping cycles, where M is a positive integer. Each mapping cycle is determined based on the association relationship between the L SSBs and the N RO resources. To be specific, in each mapping cycle, mapping between the RO resources and L different SSB indexes corresponding to the L SSBs is sequentially performed once, and any SSB may be associated with (or mapped to) one or more ROs. In other words, in the first PRACH resource used for uplink and downlink communication, the N RO resources used to send the random access preamble include an integer quantity of mapping cycles, that is, the N RO resources used to send the random access preamble are associated with the L SSBs, to form the integer quantity of mapping cycles. Because when a network device sends the L SSBs, beam directions of different SSBs may be different, in the foregoing manner, the terminal device may traverse, in turn, a beam direction of each SSB in each mapping cycle of the first PRACH resource. Therefore, in each mapping cycle, the terminal device may determine a corresponding RO resource based on an SSB index of any SSB selected from the L SSBs, to improve a success rate of the random access procedure, and facilitate a subsequent beam-based communication process.

In this application, a process in which the terminal device sends the random access preamble may be understood as that the terminal device sends a message 1 (message 1, MSG1) or a message A (message A, MSGA) that includes the random access preamble. The random access preamble may be replaced with another term, for example, a preamble, a preamble sequence, a preamble signal, a random access preamble sequence, a random access signal, or a random access preamble signal.

Optionally, in the RO resources in the M mapping cycles, the RO resources included in each mapping cycle may be used for one time of mapping of L different SSB indexes corresponding to the L SSBs. In other words, that the N RO resources are RO resources occupied by the M mapping cycles may be understood as that the N RO resources may be used for M times of mapping of L different SSB indexes corresponding to the L SSBs.

In this application, the resource used for uplink and downlink communication may include both a resource used for uplink transmission and a resource used for downlink transmission. For example, the resource is a subband (subband). The resource used for uplink and downlink communication may include a subband used for uplink transmission and a subband used for downlink transmission. The subband used for uplink transmission and the subband used for downlink transmission are located on a same component carrier.

Optionally, the subband used for uplink transmission and the subband used for downlink transmission include at least one same subcarrier, one or more subcarriers included in the subband used for uplink transmission and one or more subcarriers included in the subband used for downlink transmission are different from each other, or one or more subcarriers included in the subband used for uplink transmission and one or more subcarriers included in the subband used for downlink transmission are the same (or are identical).

For example, the resource used for uplink and downlink communication may be a subband full duplex (subband full duplex, SBFD) resource or a single frequency full duplex (single frequency full duplex, SFFD) resource.

In a possible implementation of the first aspect, the first PRACH resource further includes K RO resources, K is an integer, and the K RO resources meet at least one of the following:
the K RO resources are not used for random access;
the K RO resources are not used to carry a random access preamble; or
the K RO resources are invalid RO resources.

Based on the foregoing technical solution, when the K RO resources in the first PRACH resource other than the N RO resources meet at least one of the foregoing, the terminal device does not send the random access preamble based on the K RO resources, and correspondingly, the network device does not receive and/or detect the random access preamble based on the K RO resources. The N RO resources are RO resources occupied by the M mapping cycles, and the terminal device may traverse, in turn, a beam direction of each SSB in each mapping cycle of the first PRACH resource. Therefore, the K RO resources in the first PRACH resource other than the N RO resources may not be used for transmission of the random access preamble. This can avoid a resource waste and reduce implementation complexity.

In a possible implementation of the first aspect, K is an integer less than $\left⌈N/M\right⌉$, $\left⌈N/M\right⌉$ represents rounding up N/M, a quantity of RO resources included in the first PRACH resource is Z, and Z satisfies: $Z = N + K .$

Based on the foregoing technical solution, when K is an integer less than $\left⌈N/M\right⌉$ and Z=N+K is satisfied, the K RO resources in the first PRACH resource other than the N RO resources are insufficient to form a complete mapping cycle with the L SSBs. In other words, in the Z RO resources in the first PRACH resource, association of a maximum of M mapping cycles is completed. Therefore, association of more mapping cycles can be implemented as much as possible by using the N RO resources in the Z RO resources, and more RO resources are provided in the first PRACH resource as much as possible, to improve the success rate of the random access procedure.

It should be understood that, in the M mapping cycles, each mapping cycle is determined based on the association relationship between the L SSBs and the N RO resources. For example, parameters such as the total quantity Z of RO resources included in the first PRACH resource, a quantity Y of SSB indexes associated with any RO resource (quantities of SSB indexes associated with different RO resources may be the same), and a quantity (namely, a value of L) of different SSBs sent by the network device may be configured by using information sent by the network device. Correspondingly, the terminal device or the network device determines M based on these parameters, and may further determine N (for example, $N = \left⌈M∗\frac{L}{Y}\right⌉$, where $\left⌈M∗\frac{L}{Y}\right⌉$ represents a result of rounding up $M ∗ \frac{L}{Y}$).

Optionally, a value of M satisfies $M \leq \left⌊Z/\left(L/Y\right)\right⌋$, which indicates that the value of M is less than or equal to a result of rounding down Z/(L/Y), that is, a maximum value of M is $\left⌊Z/\left(L/Y\right)\right⌋$.

Optionally, the value of M is determined in another manner.

For example, after mapping between the Z ROs and the L SSBs is completed, an integer quantity of mapping cycles may be obtained, and a subsequent RO through which one mapping cycle cannot be formed is considered as an invalid RO (the invalid RO means that the RO is not used to send a preamble, there is no mapping between an SSB and an RO on the RO, and subsequent mapping between an RO and an SSB is not affected). In other words, M is a maximum integer obtained by performing mapping between the Z ROs and the L SSBs.

For another example, after mapping between the Z ROs and the L SSBs is completed, the first one or more mapping cycles may be obtained, and a subsequent RO is considered as invalid. In other words, the value of M is a quantity of mapping cycles.

In an example, a value of Z is 8, a value of Y is 1, and a value of L is 4. The terminal device may determine, based on these parameters, that in eight (namely, Z=8) RO resources included in the first PRACH resource, a quantity of SSB indexes associated with each RO resource is 1 (namely, Y=1), and a quantity of different SSBs sent by the network device is 4 (namely, L=4). Correspondingly, the terminal device or the network device may determine, based on these parameters, that the first PRACH resource includes a maximum of two (that is, a maximum value of M satisfies $M = \left⌊Z/\left(L/Y\right)\right⌋ = \left.\left⌊8/\left(4/1\right)\right⌋=2\right)$ mapping cycles, and the first PRACH resource includes a maximum of eight (that is, $N = \left⌈M∗\frac{L}{Y}\right⌉ = \left⌈2∗\frac{4}{1}\right⌉ = 8$) RO resources.

In another example, a value of Z is 8, a value of Y is 2, and a value of L is 5. The terminal device may determine, based on these parameters, that in eight (namely, Z=8) RO resources included in the first PRACH resource, a quantity of SSB indexes associated with each RO resource is 2 (namely, Y=2), and a quantity of different SSBs sent by the network device is 5 (namely, L=5). Correspondingly, the terminal device or the network device may determine, based on these parameters, that the first PRACH resource includes a maximum of three (that is, $M = \left⌊Z/\left(L/Y\right)\right⌋ = \left⌊8/\left(5/2\right)\right⌋ = 3$) mapping cycles, and the first PRACH resource includes a maximum of eight (that is, $N = \left⌈M∗\frac{L}{Y}\right⌉ = \left⌈3∗\frac{5}{2}\right⌉ = ∋ 8$) RO resources. A quantity of SSB indexes that are mapped to a last RO resource in the eight RO resources is 1.

In another example, a value of Z is 10, a value of Y is 2, and a value of L is 6. The terminal device may determine, based on these parameters, that in 10 (namely, Z=10) RO resources included in the first PRACH resource, a quantity of SSB indexes associated with each RO resource is 2 (namely, Y=2), and a quantity of different SSBs sent by the network device is 6 (namely, L=6). Correspondingly, the terminal device or the network device may determine, based on these parameters, that the first PRACH resource includes a maximum of three (that is, $M = \left⌊Z/\left(L/Y\right)\right⌋ = \left⌊10/\left(6/2\right)\right⌋ = 3$) mapping cycles, and the first PRACH resource includes a maximum of nine (that is, $N = \left⌈M∗\frac{L}{Y}\right⌉ = \left⌈3∗\frac{6}{2}\right⌉ = 9$) RO resources. No SSB index is mapped to a last RO resource in the 10 RO resources or the last RO resource is an invalid RO resource.

In a possible implementation of the first aspect, a time domain resource of a second PRACH resource following the time domain resource occupied by the first PRACH resource is located in one or more time domain units used for uplink communication, the second PRACH resource includes P RO resources, and P is a positive integer; and/or a time domain resource of a third PRACH resource preceding the time domain resource occupied by the first PRACH resource is located in one or more time domain units used for uplink communication, the third PRACH resource includes Q RO resources, and Q is a positive integer.

That the terminal device sends the random access preamble based on the N RO resources includes: The terminal device sends the random access preamble based on the N RO resources and at least one of the P RO resources and the Q RO resources, where in a time domain resource, an SSB index associated with a last RO resource in the N RO resources and an SSB index associated with a 1^{st} RO resource in the P RO resources are consecutive; and/or in a time domain resource, an SSB index associated with a 1^{st} RO resource in the N RO resources and an SSB index associated with a last RO resource in the Q RO resources are consecutive.

Based on the foregoing technical solution, the terminal device may send the random access preamble on the resource (for example, the first PRACH resource) used for uplink and downlink communication, and can also send the random access preamble on a resource (for example, the second PRACH resource and/or the third PRACH resource) used for uplink communication, so that uplink resources used for random access can be increased, uplink coverage is improved by providing more random access resources, and a random access delay is reduced.

In addition, in the second PRACH resource and the third PRACH resource, an SSB index associated with either of the two resources and an SSB index associated with the first PRACH are consecutive. Because a terminal device (for example, a first terminal device) that does not support communication on the resource used for uplink and downlink communication can send a random access preamble on the second PRACH resource or the third PRACH resource, in the foregoing manner, a terminal device (for example, a second terminal device) that supports communication on the resource used for uplink and downlink communication can reuse the SSB index associated with the second PRACH resource or the third PRACH resource. In this way, configuration overhead can be reduced, and a conflict that occurs because the first terminal device and the second terminal device are associated with different SSB indexes in the second PRACH resource (or the third PRACH resource) can also be avoided, thereby reducing an uplink access delay.

In this application, the resource used for uplink communication is a resource used for uplink transmission. For example, the resource used for uplink communication may be a frequency band, a subband, or the like used for uplink transmission. For example, the resource used for uplink communication may be a UL resource.

Optionally, the first PRACH resource and the second PRACH resource may be adjacent resources, and/or the first PRACH resource and the third PRACH resource may be adjacent resources. For example, the first PRACH resource meets any one or more of the following:
an index of a start time unit of the time domain resource of the first PRACH resource and an index of an end time unit of the time domain resource of the third PRACH resource are consecutive;
an index of an end time unit of the time domain resource of the first PRACH resource and an index of a start time unit of the time domain resource of the second PRACH resource are consecutive;
another resource between the start time unit of the time domain resource of the first PRACH resource and the end time unit of the time domain resource of the third PRACH resource is any resource (for example, a DL resource) of a non-PRACH resource; and
another resource between the end time unit of the time domain resource of the first PRACH resource and the start time unit of the time domain resource of the second PRACH resource is any resource (for example, a DL resource) of a non-PRACH resource.

In a possible implementation of the first aspect, a time domain resource of a second PRACH resource following the time domain resource occupied by the first PRACH resource is located in one or more time domain units used for uplink communication; the second PRACH resource includes P RO resources; P is a positive integer; the second PRACH resource is not used for random access of a second terminal device, or the second PRACH resource is not used to carry a random access preamble of the second terminal device; and the second terminal device is a device that supports communication on a time domain resource used for uplink and downlink communication; and/or
a time domain resource of a third PRACH resource preceding the time domain resource occupied by the first PRACH resource is located in one or more time domain units used for uplink communication; the third PRACH resource includes Q RO resources; Q is a positive integer; and the third PRACH resource is not used for the random access of the second terminal device, or the third PRACH resource is not used to carry the random access preamble of the second terminal device.

Based on the foregoing technical solution, the terminal device may send the random access preamble on the resource (for example, the first PRACH resource) used for uplink and downlink communication, and the terminal device does not send the random access preamble on the resource (for example, the second PRACH resource and/or the third PRACH resource) used for uplink communication. Because the terminal device (for example, the first terminal device) that does not support communication on the resource used for uplink and downlink communication can send the random access preamble on the second PRACH resource or the third PRACH resource, in the foregoing manner, a conflict that occurs because the first terminal device and the second terminal device are associated with different SSB indexes in the second PRACH resource (or the third PRACH resource) can be avoided, thereby reducing an uplink access delay.

In a possible implementation of the first aspect, a first association period (association period) and a second association period are the same; and the first association period is an association period between an SSB and an RO resource in one or more time domain units used for uplink communication, and the first association period is an association period between an SSB and an RO resource in one or more time domain units used for uplink and downlink communication.

Optionally, an association period may indicate a time concept in which an SSB and RO mapping pattern repeatedly appears in time domain.

Based on the foregoing technical solution, the first association period between an SSB and an RO resource in the one or more time domain units used for uplink communication and the second association period between an SSB and an RO resource in the one or more time domain units used for uplink and downlink communication may be determined in a same manner. In other words, a manner of determining an association period on a time domain resource used for uplink and downlink communication may be the same as a manner of determining an association period on a time domain resource used for uplink communication. This can reduce configuration overhead of the association period and reduce implementation complexity.

In a possible implementation of the first aspect, a first association pattern period (association pattern period) and a second association pattern period are the same; and the first association pattern period is an association pattern period between an SSB and an RO resource in one or more time domain units used for uplink communication, and the second association pattern period is an association pattern period between an SSB and an RO resource in one or more time domain units used for uplink and downlink communication.

Based on the foregoing technical solution, the first association pattern period between an SSB and an RO resource in the one or more time domain units used for uplink communication and the second association pattern period between an SSB and an RO resource in the one or more time domain units used for uplink and downlink communication may be determined in a same manner. In other words, a manner of determining an association pattern period on a time domain resource used for uplink and downlink communication may be the same as a manner of determining an association pattern period on a time domain resource used for uplink communication. This can reduce configuration overhead of the association pattern period and reduce implementation complexity.

In a possible implementation of the first aspect, the method further includes: The terminal device receives second information, where the second information indicates an association relationship between an SSB and a first random access preamble set transmitted on a fourth PRACH resource, a time domain resource of the fourth PRACH resource is located in one or more time domain units used for uplink communication, the first random access preamble set is used for random access of the first terminal device, and the first terminal device is a terminal device that does not support communication on the first PRACH resource. A random access preamble included in a second random access preamble set transmitted on the fourth PRACH resource is used for random access of the second terminal device, the second terminal device is a terminal device that supports communication on the first PRACH resource, and at least one random access preamble included in the second random access preamble set is different from at least one random access preamble included in the first random access preamble set.

Based on the foregoing technical solution, the terminal device may receive the second information, and determine, based on the second information, the association relationship between an SSB and the first random access preamble set transmitted on the fourth PRACH resource. In addition, the fourth PRACH resource may be further used for transmission of a second random access preamble set, the first random access preamble set is used for random access of a first terminal device, and the second terminal device is a terminal device that supports communication on the first PRACH resource. In addition, at least one random access preamble included in the second random access preamble set is different from at least one random access preamble included in the first random access preamble set. In this manner, all terminal devices with different communication capabilities can initiate random access on a PRACH resource used for uplink communication, and different terminal devices are distinguished by using different random access preamble sets, so that a conflict caused by use of a same random access preamble when the first terminal device and the second terminal device are associated with different SSB indexes in the fourth PRACH resource can be avoided.

Optionally, any random access preamble included in the second random access preamble set is different from any random access preamble included in the first random access preamble set, that is, the second random access preamble set and the first random access preamble set are different from each other. In this manner, terminal devices with different communication capabilities can implement random access on a time domain resource used for uplink communication by using different random access preambles, thereby avoiding the foregoing conflict as much as possible.

Optionally, the second information and the first information may be carried in a same message/same signaling, or may be carried in different messages/different signaling. This is not limited herein.

In a possible implementation of the first aspect, the method further includes: The terminal device receives third information, where the third information indicates an association relationship between the second random access preamble set and an SSB; or an association relationship between the second random access preamble set and an SSB is predefined.

Based on the foregoing technical solution, the terminal device can determine the association relationship between the second random access preamble set and an SSB in any one of the foregoing manners, and send the random access preamble on the fourth PRACH resource based on the association relationship, so that the network device can determine, based on the received random access preamble, a beam direction corresponding to an SSB selected by the terminal device, thereby facilitating a subsequent beam-based communication process.

Optionally, the third information and the first information may be carried in a same message/same signaling, or may be carried in different messages/different signaling. This is not limited herein.

In a possible implementation of the first aspect, the method further includes: The terminal device receives fourth information, where the fourth information indicates an association relationship between an SSB and a third random access preamble set carried on the first PRACH resource, and a random access preamble included in the third random access preamble set is used for the random access of the second terminal device; or an association relationship between the third random access preamble set and an SSB is predefined.

Based on the foregoing technical solution, the terminal device can determine the association relationship between the third random access preamble set and an SSB in any one of the foregoing manners, and send the random access preamble on the first PRACH resource based on the association relationship, so that the network device can determine, based on the received random access preamble, a beam direction corresponding to an SSB selected by the terminal device, thereby facilitating a subsequent beam-based communication process.

Optionally, the fourth information and the first information may be carried in a same message/same signaling, or may be carried in different messages/different signaling. This is not limited herein.

Optionally, the third random access preamble set meets any one of the following:
a random access preamble included in the third random access preamble set includes at least a random access preamble included in the second random access preamble set;
a random access preamble included in the third random access preamble set is the same as a random access preamble included in the second random access preamble set; or
a random access preamble included in the third random access preamble set includes at least a random access preamble included in the first random access preamble set and a random access preamble included in the second random access preamble set.

In a possible implementation of the first aspect, the method further includes: The terminal device receives fifth information, where the fifth information indicates a quantity X of random access preambles corresponding to each of one or more RO resources included in the fourth PRACH resource, and X meets any one of the following:
X is greater than or equal to a sum of a quantity of random access preambles included in the first random access preamble set and a quantity of random access preambles included in the second random access preamble set;
X is greater than or equal to a sum of a quantity of random access preambles corresponding to a first SSB set and a quantity of random access preambles corresponding to a second SSB set, where the first SSB set is a set of SSBs of the first terminal device on each RO resource, and the second SSB set is a set of SSBs of the second terminal device on each RO resource; and
X is greater than or equal to a quantity of random access preambles corresponding to a third SSB set, where the third SSB set is a union set of the first SSB set and the second SSB set.

Based on the foregoing technical solution, the terminal device may further receive the fifth information, and determine, based on the fifth information, the quantity X of random access preambles corresponding to each of the one or more RO resources included in the fourth PRACH resource. In addition, the quantity X may meet any one of the foregoing. In this manner, the terminal device can send the X random access preambles specified by the fifth information, to improve the success rate of the random access procedure.

Optionally, the fifth information and the first information may be carried in a same message/same signaling, or may be carried in different messages/different signaling. This is not limited herein.

A second aspect of this application provides a communication method. The method is performed by a network device, the method is performed by a part of components (for example, a processor, a chip, or a chip system) in the network device, or the method may be implemented by a logical module or software that can implement all or some functions of the network device. In the second aspect and possible implementations of the second aspect, an example in which the communication method is performed by the network device is used for description. In the method, the network device determines first information, where the first information indicates a first physical random access channel PRACH resource, a time domain resource of the first PRACH resource is located in one or more time domain units used for uplink and downlink communication, the first PRACH resource includes N random access occasion RO resources, the N RO resources are RO resources occupied by M mapping cycles, each mapping cycle is determined based on an association relationship between L synchronization signal/physical broadcast channel blocks SSBs and the N RO resources, and L, N, and M are all positive integers; and the network device sends the first information.

Based on the foregoing technical solution, after a terminal device receives the first information that is sent by the network device and that indicates the first PRACH resource, the terminal device may send the random access preamble based on the N RO resources included in the first PRACH resource. The time domain resource of the first PRACH resource is located in the one or more time domain units used for uplink and downlink communication. In other words, the one or more time domain units may be used for both uplink communication and downlink communication. In this manner, the terminal device can send the random access preamble based on the first PRACH resource used for uplink and downlink communication, so that the terminal device can initiate random access in a random access procedure on a resource used for uplink and downlink communication, thereby improving uplink coverage and reducing latency of the random access procedure.

In addition, the terminal device sends the random access preamble based on at least the N RO resources in the first PRACH resource, and the N RO resources are RO resources occupied by the M mapping cycles, where M is a positive integer. Each mapping cycle is determined based on the association relationship between the L SSBs and the N RO resources. To be specific, in each mapping cycle, mapping between the RO resources and L different SSB indexes corresponding to the L SSBs is sequentially performed once, and any SSB may be associated with (or mapped to) one or more ROs. In other words, in the first PRACH resource used for uplink and downlink communication, the N RO resources used to send the random access preamble include an integer quantity of mapping cycles, that is, the N RO resources used to send the random access preamble are associated with the L SSBs, to form the integer quantity of mapping cycles. Because when the network device sends the L SSBs, beam directions of different SSBs may be different, in the foregoing manner, the terminal device may traverse, in turn, a beam direction of each SSB in each mapping cycle of the first PRACH resource. Therefore, in each mapping cycle, the terminal device may determine a corresponding RO resource based on an SSB index of any SSB selected from the L SSBs, to improve a success rate of the random access procedure, and facilitate a subsequent beam-based communication process.

In a possible implementation of the second aspect, the first PRACH resource further includes K RO resources, K is an integer, and the K RO resources meet at least one of the following:
the K RO resources are not used for random access;
the K RO resources are not used to carry a random access preamble; or
the K RO resources are invalid RO resources.

Based on the foregoing technical solution, when the K RO resources in the first PRACH resource other than the N RO resources meet at least one of the foregoing, the terminal device does not send the random access preamble based on the K RO resources, and correspondingly, the network device does not receive and/or detect the random access preamble based on the K RO resources. The N RO resources are RO resources occupied by the M mapping cycles, and the terminal device may traverse, in turn, a beam direction of each SSB in each mapping cycle of the first PRACH resource. Therefore, the K RO resources in the first PRACH resource other than the N RO resources may not be used for transmission of the random access preamble. This can avoid a resource waste and reduce implementation complexity.

In a possible implementation of the second aspect, K is an integer less than $\left⌈N/M\right⌉$, $\left⌈N/M\right⌉$ represents rounding up N/M, a quantity of RO resources included in the first PRACH resource is Z, and Z satisfies: $Z = N + K .$

Based on the foregoing technical solution, when K is an integer less than $\left⌈N/M\right⌉$ and Z=N+K is satisfied, the K RO resources in the first PRACH resource other than the N RO resources are insufficient to form a complete mapping cycle with the L SSBs. In other words, in the Z RO resources in the first PRACH resource, association of a maximum of M mapping cycles is completed. Therefore, association of more mapping cycles can be implemented as much as possible by using the N RO resources in the Z RO resources, and more RO resources are provided in the first PRACH resource as much as possible, to improve the success rate of the random access procedure.

In a possible implementation of the second aspect, a time domain resource of a second PRACH resource following the time domain resource occupied by the first PRACH resource is located in one or more time domain units used for uplink communication, the second PRACH resource includes P RO resources, and P is a positive integer; and/or a time domain resource of a third PRACH resource preceding the time domain resource occupied by the first PRACH resource is located in one or more time domain units used for uplink communication, the third PRACH resource includes Q RO resources, and Q is a positive integer.

The sending the random access preamble based on the N RO resources includes: sending the random access preamble based on the N RO resources and at least one of the P RO resources and the Q RO resources, where in a time domain resource, an SSB index associated with a last RO resource in the N RO resources and an SSB index associated with a 1^{st} RO resource in the P RO resources are consecutive; or in a time domain resource, an SSB index associated with a 1^{st} RO resource in the N RO resources and an SSB index associated with a last RO resource in the Q RO resources are consecutive.

Based on the foregoing technical solution, the terminal device may send the random access preamble on the resource (for example, the first PRACH resource) used for uplink and downlink communication, and can also send the random access preamble on a resource (for example, the second PRACH resource and/or the third PRACH resource) used for uplink communication, so that uplink resources used for random access can be increased, uplink coverage is improved by providing more random access resources, and a random access delay is reduced.

In addition, in the second PRACH resource and the third PRACH resource, an SSB index associated with either of the two resources and an SSB index associated with the first PRACH are consecutive. Because a terminal device (for example, a first terminal device) that does not support communication on the resource used for uplink and downlink communication can send a random access preamble on the second PRACH resource or the third PRACH resource, in the foregoing manner, a terminal device (for example, a second terminal device) that supports communication on the resource used for uplink and downlink communication can reuse the SSB index associated with the second PRACH resource or the third PRACH resource. In this way, configuration overhead can be reduced, and a conflict that occurs because the first terminal device and the second terminal device are associated with different SSB indexes in the second PRACH resource (or the third PRACH resource) can also be avoided, thereby reducing an uplink access delay.

In a possible implementation of the second aspect, a time domain resource of a second PRACH resource following the time domain resource occupied by the first PRACH resource is located in one or more time domain units used for uplink communication; the second PRACH resource includes P RO resources; P is a positive integer; the second PRACH resource is not used for random access of a second terminal device, or the second PRACH resource is not used to carry a random access preamble of the second terminal device; and the second terminal device is a device that supports communication on a time domain resource used for uplink and downlink communication; and/or
a time domain resource of a third PRACH resource preceding the time domain resource occupied by the first PRACH resource is located in one or more time domain units used for uplink communication; the third PRACH resource includes Q RO resources; Q is a positive integer; and the third PRACH resource is not used for the random access of the second terminal device, or the third PRACH resource is not used to carry the random access preamble of the second terminal device.

Based on the foregoing technical solution, the terminal device may send the random access preamble on the resource (for example, the first PRACH resource) used for uplink and downlink communication, and the terminal device does not send the random access preamble on the resource (for example, the second PRACH resource and/or the third PRACH resource) used for uplink communication. Because the terminal device (for example, the first terminal device) that does not support communication on the resource used for uplink and downlink communication can send the random access preamble on the second PRACH resource or the third PRACH resource, in the foregoing manner, a conflict that occurs because the first terminal device and the second terminal device are associated with different SSB indexes in the second PRACH resource (or the third PRACH resource) can be avoided, thereby reducing an uplink access delay.

In a possible implementation of the second aspect, a first association period and a second association period are the same; and the first association period is an association period between an SSB and an RO resource in one or more time domain units used for uplink communication, and the first association period is an association period between an SSB and an RO resource in one or more time domain units used for uplink and downlink communication.

Based on the foregoing technical solution, the first association period between an SSB and an RO resource in the one or more time domain units used for uplink communication and the second association period between an SSB and an RO resource in the one or more time domain units used for uplink and downlink communication may be determined in a same manner. In other words, a manner of determining an association period on a time domain resource used for uplink and downlink communication may be the same as a manner of determining an association period on a time domain resource used for uplink communication. This can reduce configuration overhead of the association period and reduce implementation complexity.

In a possible implementation of the second aspect, a first association pattern period and a second association pattern period are the same; and the first association pattern period is an association pattern period between an SSB and an RO resource in one or more time domain units used for uplink communication, and the second association pattern period is an association pattern period between an SSB and an RO resource in one or more time domain units used for uplink and downlink communication.

Based on the foregoing technical solution, the first association pattern period between an SSB and an RO resource in the one or more time domain units used for uplink communication and the second association pattern period between an SSB and an RO resource in the one or more time domain units used for uplink and downlink communication may be determined in a same manner. In other words, a manner of determining an association pattern period on a time domain resource used for uplink and downlink communication may be the same as a manner of determining an association pattern period on a time domain resource used for uplink communication. This can reduce configuration overhead of the association pattern period and reduce implementation complexity.

In a possible implementation of the second aspect, the method further includes: The network device sends second information, where the second information indicates an association relationship between an SSB and a first random access preamble set transmitted on a fourth PRACH resource, a time domain resource of the fourth PRACH resource is located in one or more time domain units used for uplink communication, the first random access preamble set is used for random access of the first terminal device, and the first terminal device is a terminal device that does not support communication on the first PRACH resource. A random access preamble included in a second random access preamble set transmitted on the fourth PRACH resource is used for random access of the second terminal device, the second terminal device is a terminal device that supports communication on the first PRACH resource, and at least one random access preamble included in the second random access preamble set is different from at least one random access preamble included in the first random access preamble set.

Based on the foregoing technical solution, the terminal device may receive the second information from the network device, and determine, based on the second information, the association relationship between an SSB and the first random access preamble set transmitted on the fourth PRACH resource. In addition, the fourth PRACH resource may be further used for transmission of the second random access preamble set, the first random access preamble set is used for random access of a first terminal device, and the second terminal device is a terminal device that supports communication on the first PRACH resource. In addition, at least one random access preamble included in the second random access preamble set is different from at least one random access preamble included in the first random access preamble set. In this manner, all terminal devices with different communication capabilities can initiate random access on a PRACH resource used for uplink communication, and different terminal devices are distinguished by using different random access preamble sets, so that a conflict caused by use of a same random access preamble when the first terminal device and the second terminal device are associated with different SSB indexes in the fourth PRACH resource can be avoided.

Optionally, any random access preamble included in the second random access preamble set is different from any random access preamble included in the first random access preamble set, that is, the second random access preamble set and the first random access preamble set are different from each other. In this manner, terminal devices with different communication capabilities can implement random access on a time domain resource used for uplink communication by using different random access preambles, thereby avoiding the foregoing conflict as much as possible.

In a possible implementation of the second aspect, the method further includes: The network device sends third information, where the third information indicates an association relationship between the second random access preamble set and an SSB; or an association relationship between the second random access preamble set and an SSB is predefined.

Based on the foregoing technical solution, the terminal device can determine the association relationship between the second random access preamble set and an SSB in any one of the foregoing manners, and send the random access preamble on the fourth PRACH resource based on the association relationship, so that the network device can determine, based on the received random access preamble, a beam direction corresponding to an SSB selected by the terminal device, thereby facilitating a subsequent beam-based communication process.

In a possible implementation of the second aspect, the method further includes: The network device sends fourth information, where the fourth information indicates an association relationship between an SSB and a third random access preamble set carried on the first PRACH resource, and a random access preamble included in the third random access preamble set is used for the random access of the second terminal device; or an association relationship between the third random access preamble set and an SSB is predefined.

Based on the foregoing technical solution, the terminal device can determine the association relationship between the third random access preamble set and an SSB in any one of the foregoing manners, and send the random access preamble on the first PRACH resource based on the association relationship, so that the network device can determine, based on the received random access preamble, a beam direction corresponding to an SSB selected by the terminal device, thereby facilitating a subsequent beam-based communication process.

In a possible implementation of the second aspect, the method further includes: The network device sends fifth information, where the fifth information indicates a quantity X of random access preambles corresponding to each of one or more RO resources included in the fourth PRACH resource, and X meets any one of the following:
X is greater than or equal to a sum of a quantity of random access preambles included in the first random access preamble set and a quantity of random access preambles included in the second random access preamble set;
X is greater than or equal to a sum of a quantity of random access preambles corresponding to a first SSB set and a quantity of random access preambles corresponding to a second SSB set, where the first SSB set is a set of SSBs of the first terminal device on each RO resource, and the second SSB set is a set of SSBs of the second terminal device on each RO resource; and
X is greater than or equal to a quantity of random access preambles corresponding to a third SSB set, where the third SSB set is a union set of the first SSB set and the second SSB set.

Based on the foregoing technical solution, the terminal device may further receive the fifth information from the network device, and determine, based on the fifth information, the quantity X of random access preambles corresponding to each of the one or more RO resources included in the fourth PRACH resource. In addition, the quantity X may meet any one of the foregoing. In this manner, the terminal device can send the X random access preambles specified by the fifth information, to improve the success rate of the random access procedure.

A third aspect of this application provides a communication method. The method is performed by a terminal device, the method is performed by a part of components (for example, a processor, a chip, or a chip system) in the terminal device, or the method may be implemented by a logical module or software that can implement all or some functions of the terminal device. In the third aspect and possible implementations of the third aspect, an example in which the communication method is performed by the terminal device is used for description. In the method, the terminal device receives configuration information of a fourth PRACH resource, where a time domain resource of the fourth PRACH resource is located in one or more time domain units used for uplink communication; and the terminal device receives second information, where the second information indicates an association relationship between an SSB and a first random access preamble set transmitted on the fourth PRACH resource, a random access preamble included in the first random access preamble set is used for random access of a first terminal device, and the first terminal device is a terminal device that does not support communication on a first PRACH resource. A random access preamble included in a second random access preamble set transmitted on the fourth PRACH resource is used for random access of a second terminal device, the second terminal device is a terminal device that supports communication on the first PRACH resource, and at least one random access preamble included in the second random access preamble set is different from at least one random access preamble included in the first random access preamble set.

Based on the foregoing technical solution, the terminal device may receive the second information, and determine, based on the second information, the association relationship between an SSB and the first random access preamble set transmitted on the fourth PRACH resource. In addition, the fourth PRACH resource may be further used for transmission of the second random access preamble set, the first random access preamble set is used for random access of a first terminal device, and the second terminal device is a terminal device that supports communication on the first PRACH resource. In addition, at least one random access preamble included in the second random access preamble set is different from at least one random access preamble included in the first random access preamble set. In this manner, all terminal devices with different communication capabilities can initiate random access on a PRACH resource used for uplink communication, and different terminal devices are distinguished by using different random access preamble sets, so that a conflict caused by use of a same random access preamble when the first terminal device and the second terminal device are associated with different SSB indexes in the fourth PRACH resource can be avoided.

Optionally, any random access preamble included in the second random access preamble set is different from any random access preamble included in the first random access preamble set, that is, the second random access preamble set and the first random access preamble set are different from each other. In this manner, terminal devices with different communication capabilities can implement random access on a time domain resource used for uplink communication by using different random access preambles, thereby avoiding the foregoing conflict as much as possible.

In a possible implementation of the third aspect, the method further includes: The terminal device receives third information, where the third information indicates an association relationship between the second random access preamble set and an SSB; or an association relationship between the second random access preamble set and an SSB is predefined.

Based on the foregoing technical solution, the terminal device can determine the association relationship between the second random access preamble set and an SSB in any one of the foregoing manners, and send the random access preamble on the fourth PRACH resource based on the association relationship, so that the network device can determine, based on the received random access preamble, a beam direction corresponding to an SSB selected by the terminal device, thereby facilitating a subsequent beam-based communication process.

In a possible implementation of the third aspect, the method further includes: The terminal device receives fourth information, where the fourth information indicates an association relationship between an SSB and a third random access preamble set carried on the first PRACH resource, and a random access preamble included in the third random access preamble set is used for the random access of the second terminal device; or an association relationship between the third random access preamble set and an SSB is predefined.

Based on the foregoing technical solution, the terminal device can determine the association relationship between the third random access preamble set and an SSB in any one of the foregoing manners, and send the random access preamble on the first PRACH resource based on the association relationship, so that the network device can determine, based on the received random access preamble, a beam direction corresponding to an SSB selected by the terminal device, thereby facilitating a subsequent beam-based communication process.

Optionally, the third random access preamble set meets any one of the following:
a random access preamble included in the third random access preamble set includes at least a random access preamble included in the second random access preamble set;
a random access preamble included in the third random access preamble set is the same as a random access preamble included in the second random access preamble set; or
a random access preamble included in the third random access preamble set includes at least a random access preamble included in the first random access preamble set and a random access preamble included in the second random access preamble set.

In a possible implementation of the third aspect, the method further includes: The terminal device receives fifth information, where the fifth information indicates a quantity X of random access preambles corresponding to each of one or more RO resources included in the fourth PRACH resource, and X meets any one of the following:
X is greater than or equal to a sum of a quantity of random access preambles included in the first random access preamble set and a quantity of random access preambles included in the second random access preamble set;
X is greater than or equal to a sum of a quantity of random access preambles corresponding to a first SSB set and a quantity of random access preambles corresponding to a second SSB set, where the first SSB set is a set of SSBs of the first terminal device on each RO resource, and the second SSB set is a set of SSBs of the second terminal device on each RO resource; and
X is greater than or equal to a quantity of random access preambles corresponding to a third SSB set, where the third SSB set is a union set of the first SSB set and the second SSB set.

Based on the foregoing technical solution, the terminal device may further receive the fifth information, and determine, based on the fifth information, the quantity X of random access preambles corresponding to each of the one or more RO resources included in the fourth PRACH resource. In addition, the quantity X may meet any one of the foregoing. In this manner, the terminal device can send the X random access preambles specified by the fifth information, to improve the success rate of the random access procedure.

A fourth aspect of this application provides a communication method. The method is performed by a network device, the method is performed by a part of components (for example, a processor, a chip, or a chip system) in the network device, or the method may be implemented by a logical module or software that can implement all or some functions of the network device. In the second aspect and possible implementations of the second aspect, an example in which the communication method is performed by the network device is used for description. In the method, the network device sends configuration information of a fourth PRACH resource, where a time domain resource of the fourth PRACH resource is located in one or more time domain units used for uplink communication; and the network device sends second information, where the second information indicates an association relationship between an SSB and a first random access preamble set transmitted on the fourth PRACH resource, a random access preamble included in the first random access preamble set is used for random access of a first terminal device, and the first terminal device is a terminal device that does not support communication on a first PRACH resource. A random access preamble included in a second random access preamble set transmitted on the fourth PRACH resource is used for random access of a second terminal device, the second terminal device is a terminal device that supports communication on the first PRACH resource, and at least one random access preamble included in the second random access preamble set is different from at least one random access preamble included in the first random access preamble set.

Based on the foregoing technical solution, the terminal device may receive the second information from the network device, and determine, based on the second information, the association relationship between an SSB and the first random access preamble set transmitted on the fourth PRACH resource. In addition, the fourth PRACH resource may be further used for transmission of the second random access preamble set, the first random access preamble set is used for random access of a first terminal device, and the second terminal device is a terminal device that supports communication on the first PRACH resource. In addition, at least one random access preamble included in the second random access preamble set is different from at least one random access preamble included in the first random access preamble set. In this manner, all terminal devices with different communication capabilities can initiate random access on a PRACH resource used for uplink communication, and different terminal devices are distinguished by using different random access preamble sets, so that a conflict caused by use of a same random access preamble when the first terminal device and the second terminal device are associated with different SSB indexes in the fourth PRACH resource can be avoided.

Optionally, any random access preamble included in the second random access preamble set is different from any random access preamble included in the first random access preamble set, that is, the second random access preamble set and the first random access preamble set are different from each other. In this manner, terminal devices with different communication capabilities can implement random access on a time domain resource used for uplink communication by using different random access preambles, thereby avoiding the foregoing conflict as much as possible.

In a possible implementation of the fourth aspect, the method further includes: The network device sends third information, where the third information indicates an association relationship between the second random access preamble set and an SSB; or an association relationship between the second random access preamble set and an SSB is predefined.

Based on the foregoing technical solution, the terminal device can determine the association relationship between the second random access preamble set and an SSB in any one of the foregoing manners, and send the random access preamble on the fourth PRACH resource based on the association relationship, so that the network device can determine, based on the received random access preamble, a beam direction corresponding to an SSB selected by the terminal device, thereby facilitating a subsequent beam-based communication process.

In a possible implementation of the fourth aspect, the method further includes: The network device sends fourth information, where the fourth information indicates an association relationship between an SSB and a third random access preamble set carried on the first PRACH resource, and a random access preamble included in the third random access preamble set is used for the random access of the second terminal device; or an association relationship between the third random access preamble set and an SSB is predefined.

Based on the foregoing technical solution, the terminal device can determine the association relationship between the third random access preamble set and an SSB in any one of the foregoing manners, and send the random access preamble on the first PRACH resource based on the association relationship, so that the network device can determine, based on the received random access preamble, a beam direction corresponding to an SSB selected by the terminal device, thereby facilitating a subsequent beam-based communication process.

In a possible implementation of the fourth aspect, the method further includes: The network device sends fifth information, where the fifth information indicates a quantity X of random access preambles corresponding to each of one or more RO resources included in the fourth PRACH resource, and X meets any one of the following:
X is greater than or equal to a sum of a quantity of random access preambles included in the first random access preamble set and a quantity of random access preambles included in the second random access preamble set;
X is greater than or equal to a sum of a quantity of random access preambles corresponding to a first SSB set and a quantity of random access preambles corresponding to a second SSB set, where the first SSB set is a set of SSBs of the first terminal device on each RO resource, and the second SSB set is a set of SSBs of the second terminal device on each RO resource; and
X is greater than or equal to a quantity of random access preambles corresponding to a third SSB set, where the third SSB set is a union set of the first SSB set and the second SSB set.

Based on the foregoing technical solution, the terminal device may further receive the fifth information from the network device, and determine, based on the fifth information, the quantity X of random access preambles corresponding to each of the one or more RO resources included in the fourth PRACH resource. In addition, the quantity X may meet any one of the foregoing. In this manner, the terminal device can send the X random access preambles specified by the fifth information, to improve the success rate of the random access procedure.

A fifth aspect of this application provides a communication apparatus. The apparatus is a terminal device, the apparatus is a part of components (for example, a processor, a chip, or a chip system) in the terminal device, or the apparatus may be a logical module or software that can implement all or some functions of the terminal device. In the fifth aspect and possible implementations of the fifth aspect, an example in which the communication apparatus is the terminal device is used for description.

The apparatus includes a processing unit and a transceiver unit. The transceiver unit is configured to receive first information, where the first information indicates a first PRACH resource, a time domain resource of the first PRACH resource is located in one or more time domain units used for uplink and downlink communication, the first PRACH resource includes N RO resources, the N RO resources are RO resources occupied by M mapping cycles, each mapping cycle is determined based on an association relationship between L SSBs and the N RO resources, and L, N, and M are all positive integers; and the processing unit is configured to send a random access preamble (preamble) based on the N RO resources.

In the fifth aspect of this application, a composition module of the communication apparatus may be further configured to: perform the steps performed in the possible implementations of the first aspect, and achieve corresponding technical effects. For details, refer to the first aspect. Details are not described herein again.

A sixth aspect of this application provides a communication apparatus. The apparatus is a network device, the apparatus is a part of components (for example, a processor, a chip, or a chip system) in the network device, or the apparatus may be a logical module or software that can implement all or some functions of the network device. In the sixth aspect and possible implementations of the sixth aspect, an example in which the communication apparatus is the network device is used for description.

The apparatus includes a processing unit and a transceiver unit. The processing unit is configured to determine first information, where the first information indicates a first physical random access channel PRACH resource, a time domain resource of the first PRACH resource is located in one or more time domain units used for uplink and downlink communication, the first PRACH resource includes N random access occasion RO resources, the N RO resources are RO resources occupied by M mapping cycles, each mapping cycle is determined based on an association relationship between L SSBs and the N RO resources, and L, N, and M are all positive integers; and the transceiver unit is configured to send the first information.

In the sixth aspect of this application, a composition module of the communication apparatus may be further configured to: perform the steps performed in the possible implementations of the second aspect, and achieve corresponding technical effects. For details, refer to the second aspect. Details are not described herein again.

A seventh aspect of this application provides a communication apparatus. The apparatus is a terminal device, the apparatus is a part of components (for example, a processor, a chip, or a chip system) in the terminal device, or the apparatus may be a logical module or software that can implement all or some functions of the terminal device. In the seventh aspect and possible implementations of the seventh aspect, an example in which the communication apparatus is the terminal device is used for description.

The apparatus includes a processing unit and a transceiver unit. The transceiver unit is configured to receive configuration information of a fourth PRACH resource, where a time domain resource of the fourth PRACH resource is located in one or more time domain units used for uplink communication; the processing unit is configured to determine the fourth PRACH resource based on the configuration information; and the transceiver unit is further configured to receive second information, where the second information indicates an association relationship between an SSB and a first random access preamble set transmitted on the fourth PRACH resource, a random access preamble included in the first random access preamble set is used for random access of a first terminal device, and the first terminal device is a terminal device that does not support communication on the first PRACH resource. A random access preamble included in a second random access preamble set transmitted on the fourth PRACH resource is used for random access of a second terminal device, the second terminal device is a terminal device that supports communication on the first PRACH resource, and at least one random access preamble included in the second random access preamble set is different from at least one random access preamble included in the first random access preamble set.

In the seventh aspect of this application, a composition module of the communication apparatus may be further configured to: perform the steps performed in the possible implementations of the third aspect, and achieve corresponding technical effects. For details, refer to the third aspect. Details are not described herein again.

An eighth aspect of this application provides a communication apparatus. The apparatus is a network device, the apparatus is a part of components (for example, a processor, a chip, or a chip system) in the network device, or the apparatus may be a logical module or software that can implement all or some functions of the network device. In the eighth aspect and possible implementations of the eighth aspect, an example in which the communication apparatus is the network device is used for description.

The apparatus includes a processing unit and a transceiver unit. The processing unit is configured to determine configuration information of a fourth PRACH resource and second information; the transceiver unit is configured to send the configuration information of the fourth PRACH resource, where a time domain resource of the fourth PRACH resource is located in one or more time domain units used for uplink communication; and the transceiver unit is further configured to send the second information, where the second information indicates an association relationship between an SSB and a first random access preamble set transmitted on the fourth PRACH resource, a random access preamble included in the first random access preamble set is used for random access of a first terminal device, and the first terminal device is a terminal device that does not support communication on the first PRACH resource. A random access preamble included in a second random access preamble set transmitted on the fourth PRACH resource is used for random access of a second terminal device, the second terminal device is a terminal device that supports communication on the first PRACH resource, and at least one random access preamble included in the second random access preamble set is different from at least one random access preamble included in the first random access preamble set.

In the eighth aspect of this application, a composition module of the communication apparatus may be further configured to: perform the steps performed in the possible implementations of the fourth aspect, and achieve corresponding technical effects. For details, refer to the fourth aspect. Details are not described herein again.

A ninth aspect of this application provides a communication apparatus, including at least one processor. The at least one processor is coupled to at least one memory, and the at least one memory is configured to store a program or instructions. The at least one processor is configured to execute the program or the instructions, so that the apparatus implements the method according to any possible implementation in any one of the first aspect to the fourth aspect.

A tenth aspect of this application provides a communication apparatus, including at least one logic circuit and an input/output interface. The logic circuit is configured to perform the method according to any possible implementation in any one of the first aspect to the fourth aspect.

An eleventh aspect of this application provides a communication system. The communication system includes the foregoing terminal device and the foregoing network device.

A twelfth aspect of this application provides a computer-readable storage medium. The storage medium is configured to store one or more computer-executable instructions. When the computer-executable instructions are executed by a processor, the processor performs the method according to any possible implementation in any one of the first aspect to the fourth aspect.

A thirteenth aspect of this application provides a computer program product (also referred to as a computer program). When the computer program in the computer program product is executed by a processor, the processor performs the method according to any possible implementation in any one of the first aspect to the fourth aspect.

A fourteenth aspect of this application provides a chip or a chip system. The chip or the chip system includes at least one processor configured to support a communication apparatus in implementing the method according to any possible implementation in any one of the first aspect to the fourth aspect.

In a possible design, the chip or the chip system may further include at least one memory, and the at least one memory is configured to store program instructions and data that are necessary for the communication apparatus. The chip or the chip system may include a chip, or may include the chip and another discrete component. Optionally, the chip or the chip system further includes an interface circuit, and the interface circuit provides program instructions and/or data for the at least one processor.

For technical effects brought by any design in the fifth aspect to the fourteenth aspect, refer to the technical effects brought by different designs in the first aspect to the fourth aspect. Details are not described herein again.

### BRIEF DESCRIPTION OF DRAWINGS

FIG. 1a to FIG. 1d are some diagrams of communication resources according to this application;
FIG. 2 is a diagram of a communication system according to this application;
FIG. 3a and FIG. 3b are diagrams of random access procedures according to this application;
FIG. 4a to FIG. 4i are some diagrams of PRACH resources according to this application;
FIG. 5 is a diagram of a communication method according to this application;
FIG. 6 to FIG. 8 are some diagrams of RO resources according to this application;
FIG. 9 is another diagram of a communication method according to this application; and
FIG. 10 to FIG. 13 are some diagrams of communication apparatuses according to this application.

### DESCRIPTION OF EMBODIMENTS

First, some terms in embodiments of this application are explained and described, to facilitate understanding of a person skilled in the art.
(1) Configuration and preconfiguration: In this application, both configuration and preconfiguration are used. The configuration means that a network device such as a base station or a server sends configuration information of some parameters or parameter values to a terminal via a message or signaling, so that the terminal determines a communication parameter or a transmission resource based on the values or the information. Similar to the configuration, the preconfiguration may be a manner in which a network device such as a base station or a server sends parameter information or a value to a terminal through a communication link or a carrier, or may be a manner in which a corresponding parameter or parameter value is defined in a standard or a related parameter or value is set in a terminal device in advance. This is not limited in this application. Further, these values and parameters may be changed or updated.
(2) In this application, "indicating" may include directly indicating and indirectly indicating. When a piece of indication information is described as indicating A, it may be understood as that the indication information carries A, directly indicates A, or indirectly indicates A.

In this application, information indicated by the indication information is referred to as to-be-indicated information. In a specific implementation process, the to-be-indicated information is indicated in a plurality of manners. For example, the to-be-indicated information may be directly indicated, for example, indicated by using the to-be-indicated information or an index of the to-be-indicated information. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overhead to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device. The configuration information may include, for example, but not limited to one or a combination of at least two of RRC signaling, medium access control (medium access control, MAC) layer signaling, and physical layer signaling. The MAC layer signaling includes, for example, a medium access control control element (medium access control control element, MAC CE), and the physical layer signaling includes, for example, downlink control information (downlink control information, DCI).

(3) The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

In addition, in this application, unless otherwise specified, for same or similar parts in embodiments, refer to each other. In embodiments of this application and methods/designs/implementations in embodiments, unless otherwise specified or logic conflicts occur, terms and/or descriptions between different embodiments and between the methods/designs/implementations in embodiments are consistent and may be mutually referenced, and different embodiments and technical features in the methods/designs/implementations in embodiments may be combined to form a new embodiment, method, or implementation based on an internal logic relationship thereof. The following implementations of this application do not constitute a limitation on the protection scope of this application.

(4) "Sending" and "receiving" in embodiments of this application represent signal transmission directions. A communication process between an entity A and an entity B is used as an example. In this application, that the entity A sends information to the entity B may be that A directly sends the information to B, or may be that A indirectly sends the information to B through another entity. Similarly, that the entity B receives information from the entity A may be that the entity B directly receives the information sent by the entity A, or may be that the entity B indirectly receives the information sent by the entity A through another entity. The entity A and the entity B herein each may be a RAN node or a terminal, or may be a module in the RAN node or the terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station. The "sending" may also be understood as "outputting" of a chip interface, and the "receiving" may also be understood as "inputting" of the chip interface.

### (5) Subband full duplex

With rapid development of the 5th generation mobile communication technology, namely, new radio (New Radio, NR), various communication requirements have emerged. Emerging services such as virtual reality (virtual reality, VR) and Industry 4.0 require NR to support low-delay and large-capacity uplink services. However, in a widely used time division duplex (time division duplex, TDD) system, a downlink (downlink, DL) usually occupies most time resources. This leads to poor uplink (uplink, UL) coverage and a large delay, and may fail to meet the requirements of the emerging services such as the VR and the Industry 4.0.

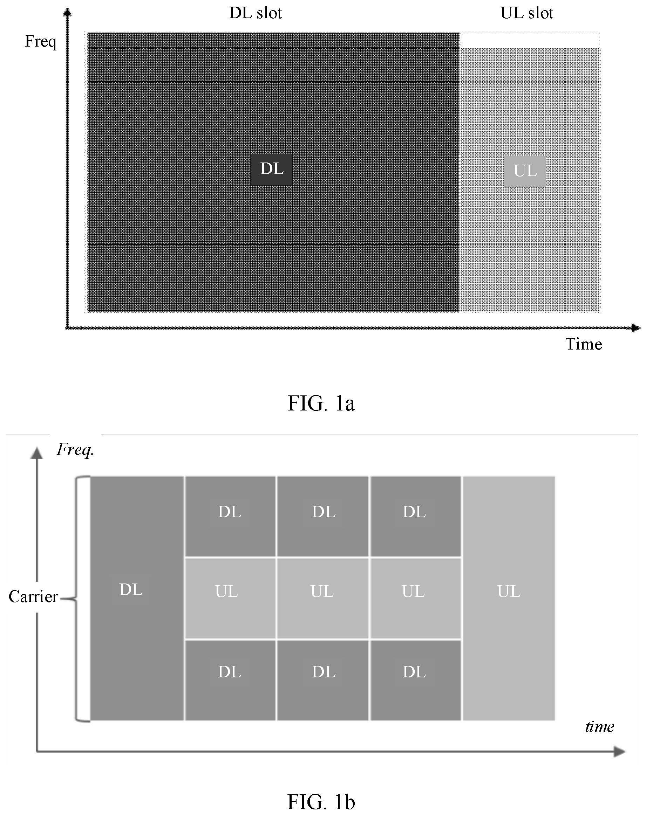

For example, as shown in FIG. 1a, a horizontal direction represents time domain (denoted as Time), a vertical direction represents frequency domain (denoted as Freq), a rectangular block "DL" represents a group of time-frequency resources used for transmission of downlink data or control information, a time domain range occupied by the rectangular block "DL" is referred to as a downlink slot (DL slot), a rectangular block "UL" represents a group of time-frequency resources used for transmission of uplink data or control information, and a time domain range occupied by the rectangular block "UL" is referred to as an uplink slot (UL slot).

In a possible implementation, subband full duplex (subband full duplex, SBFD) and single frequency full duplex (single frequency full duplex, SFFD) solutions are used to improve uplink coverage performance and reduce a delay in the TDD system. In the SBFD solution, one component carrier (component carrier, CC) is divided into a plurality of non-overlapping subbands, and transmission directions of different subbands may be different. The following separately provides descriptions by using some examples.

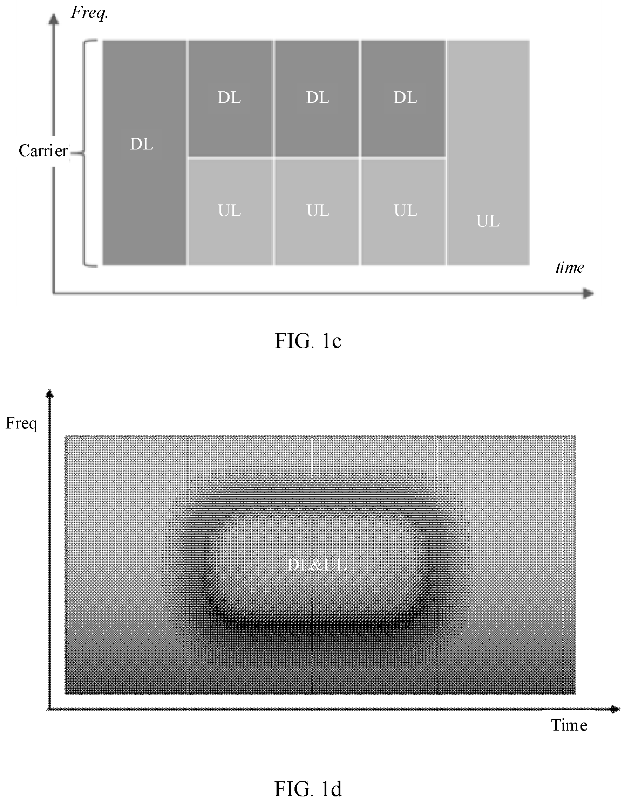

As shown in FIG. 1b and FIG. 1c, a horizontal direction represents time domain, a vertical direction represents frequency domain, a block "DL" represents a downlink resource used for transmission of downlink data or control information, and a block "UL" represents an uplink resource used for transmission of uplink data or control information. A time period including both DL and UL is referred to as an SBFD slot or symbol, and a time period including only an uplink resource is referred to as an uplink slot or an uplink symbol. In short, in SBFD, different frequency domain resources (subbands) are used in uplink and downlink transmission. In SFFD, same frequency domain resources are used in uplink and downlink transmission.

As shown in FIG. 1d, in the SFFD solution, on one symbol, an entire CC may be used for both sending and receiving. In FIG. 1d, a horizontal direction represents time domain, a vertical direction represents frequency domain, and a rectangular block "DL&UL" in the figure represents a group of time-frequency resources used for transmission of control information or both downlink data and uplink data.

### (6) Other terms

1. Subcarrier: A frequency domain resource is divided into several sub-resources in an OFDM system, and each sub-resource in frequency domain may be referred to as a subcarrier. The subcarrier may also be understood as a minimum granularity of the frequency domain resource.
2. Subcarrier spacing: The subcarrier spacing is an interval between center positions or peak positions of two adjacent subcarriers in frequency domain in the OFDM system. For example, a subcarrier spacing in the LTE system is 15 kHz, and a subcarrier spacing in the 5G NR system may be 15 kHz, 30 kHz, 60 kHz, 120 kHz, or the like.
3. Resource block: N contiguous subcarriers in frequency domain may be referred to as one resource block. For example, one resource block in the LTE system includes 12 subcarriers, and one resource block in the NR system also includes 12 subcarriers. With evolution of a communication system, one resource block may alternatively include another quantity of subcarriers.
4. Slot: One slot in the NR system includes 14 OFDM symbols. For example, a slot length corresponding to a 15 kHz subcarrier spacing is 1 ms, and a slot length corresponding to a 30 kHz subcarrier spacing is 0.5 ms.
5. Subframe: A time length of one subframe in the NR system is 1 ms.
6. OFDM symbol: The OFDM symbol is a minimum time unit in time domain in the OFDM system.
7. Time-frequency resource unit: The time-frequency resource unit is a minimum resource granularity in the OFDM system. The time-frequency resource unit is an OFDM symbol in time domain, and the time-frequency resource unit is a subcarrier in frequency domain.
8. RO: The RO may be understood as a time-frequency resource used by a terminal device for random access.
9. Preamble: The preamble is an access sequence sent by a UE during random access.
10. PRACH: The PRACH is a physical random access channel carrying a sent preamble sequence.
11. RO-SSB mapping: To improve performance, a base station broadcasts SSBs using different beams, and a terminal measures received signal strength of the SSBs in the different beams and selects an optimal beam. To facilitate the terminal to feed back the selected beam, the base station binds an SSB and an RO to form SSB-RO mapping. In this way, a beam selected by the terminal can be determined based on a position of an RO selected by the terminal for sending a preamble. The beam may be an analog beam, a digital beam, or the like.
12. RO-SSB mapping cycle: A minimum time interval for completing mapping of all SSBs to ROs is referred to as the SSB-RO mapping cycle.

This application may be applied to a long term evolution (long term evolution, LTE) system, a new radio (new radio, NR) system, or another communication system. The communication system includes a network device and a terminal device. The network device is used as a configuration information sending entity, and the terminal device is used as a configuration information receiving entity. Specifically, in the communication system, an entity sends configuration information to another entity, and sends data to the another entity or receives data sent by the another entity. The another entity receives the configuration information, and sends data to the configuration information sending entity based on the configuration information or receives data sent by the configuration information sending entity. This application may be applied to a terminal device in a connected state or an active state (ACTIVE), or may be applied to a terminal device in a non-connected state (INACTIVE) or an idle state (IDLE).

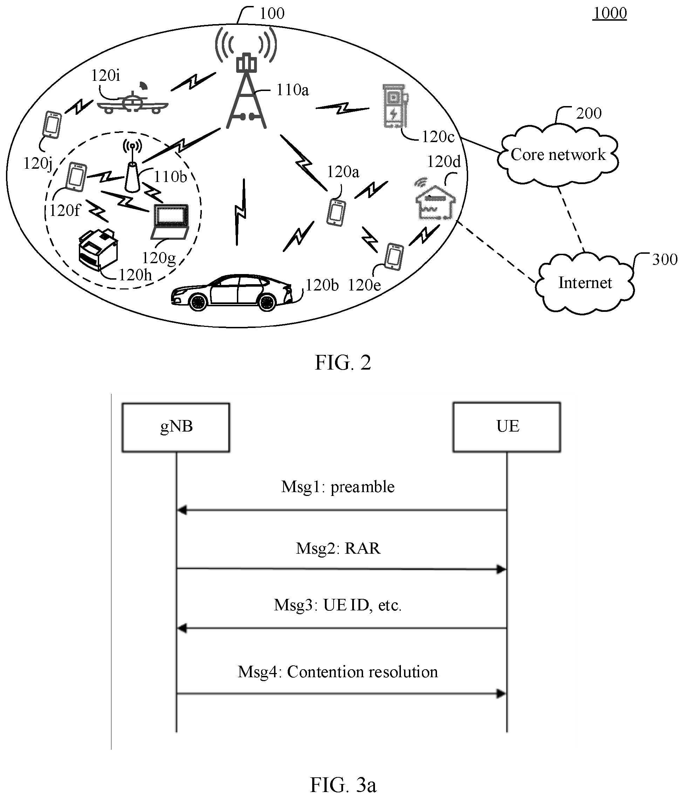

FIG. 2 is a diagram of an architecture of a communication system 1000 to which an embodiment of this application is applied. As shown in FIG. 2, the communication system includes a radio access network (radio access network, RAN) 100 and a core network 200. Optionally, the communication system 1000 may further include an internet 300. The RAN 100 includes at least one RAN node (for example, 110a and 110b in FIG. 2, which are collectively referred to as 110), and may further include at least one terminal (for example, 120a to 120j in FIG. 2, which are collectively referred to as 120). The RAN 100 may further include another RAN node, for example, a wireless relay device and/or a wireless backhaul device (not shown in FIG. 1). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. Terminals may be connected to each other in a wired or wireless manner, and RAN nodes may be connected to each other in a wired or wireless manner.

The RAN 100 may be an evolved universal terrestrial radio access (evolved universal terrestrial radio access, E-UTRA) system, an NR system, and a future radio access system defined in the 3rd generation partnership project (3rd generation partnership project, 3GPP). The RAN 100 may alternatively include the foregoing two or more different radio access systems. The RAN 100 may alternatively be an open RAN (open RAN, O-RAN).

The RAN node, also referred to as a radio access network device, a RAN entity, or an access node, is configured to help a terminal access a communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, or a base station in a future mobile communication system. The RAN node may be a macro base station (for example, 110a in FIG. 2), may be a micro base station or an indoor base station (for example, 110b in FIG. 2), or may be a relay node or a donor node.

In another application scenario, a plurality of RAN nodes may cooperate to help a terminal implement radio access, and different RAN nodes separately implement some functions of a base station. For example, the RAN node may be a central unit (central unit, CU), a distributed unit (distributed unit, DU), or a radio unit (radio unit, RU). The CU herein completes functions of a radio resource control protocol layer and a packet data convergence protocol (packet data convergence protocol, PDCP) layer of the base station, and may further complete functions of a service data adaptation protocol (service data adaptation protocol, SDAP) layer. The DU completes functions of a radio link control layer and a MAC layer of the base station, and may further complete a part or all functions of a physical layer. For specific descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further classified into two types of RAN nodes at a CU-control plane and a CU-user plane.

In different systems, the CU (or the CU-CP and the CU-UP), the DU, or the RU may alternatively have different names, but a person skilled in the art may understand meanings of the names. For example, in an open access network (open RAN, O-RAN or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any of the CU (or the CU-CP or the CU-UP), the DU, and the RU in this application may be implemented by a software module, a hardware module, or a combination of the software module and the hardware module.

Communication between an access network device and a terminal device complies with a specific protocol layer structure. Protocol layers may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

For a correspondence between network elements in the ORAN system and protocol layer functions that may be implemented by the network elements, refer to Table 1 below.

**Table 1**

| | |
|---|---|
| ORAN network element | 3GPP protocol layer function |
| O-CU-CP | RRC+PCDP-control plane (PDCP-C) |
| O-CU-UP | SDAP+PCDP-user plane (PDCP-U) |
| O-DU | RLC+MAC+PHY-high |
| O-RU | PHY-low |

For ease of description, the following is described by using an example in which the base station is used as a RAN node.

A terminal is a device having a wireless transceiver function, and may send a signal to the base station, or receive a signal from the base station. The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, autonomous driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 2 may be configured as a mobile base station. For a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b in FIG. 2 may be referred to as communication apparatuses having a base station function, and 120a to 120j in FIG. 2 may be referred to as communication apparatuses having a terminal function.

Communication between a base station and a terminal, between base stations, or between terminals may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. The function of the terminal may alternatively be performed by a module (for example, a chip or a modem) in the terminal, or may be performed by an apparatus including the function of the terminal.

Embodiments of this application mainly relate to a random access procedure. The following describes the random access procedure by using an example.

In LTE and NR, a terminal completes uplink time synchronization with a base station in a random access (random access, RA) procedure, and establishes an RRC connection to the base station in the random access procedure. After the RRC connection is established between the terminal and the base station, uplink and downlink service data transmission may be performed. In addition, generally, before initiating uplink random access, the terminal further needs to detect and receive downlink synchronization signals sent by the base station, to complete downlink time synchronization and frequency synchronization. The downlink synchronization signals generally include a primary synchronization signal (primary synchronization signal, PSS) and a secondary synchronization signal (secondary synchronization signal, SSS). In NR, the PSS and the SSS are carried in a synchronization/broadcast block (SS/PBCH block, SSB).

Currently, in NR, there are two types of random access procedures: a type-1 RA procedure and a type-2 RA procedure. The type-1 RA procedure is also referred to as a 4-step RA procedure, and the type-2 RA procedure is also referred to as a 2-step RA procedure. Depending on whether a preamble sending conflict exists between UEs, the type-1/type-2 RA procedure includes a contention based random access (contention based random access, CBRA) procedure and a contention free random access (contention free random access, CFRA) procedure. The CBRA procedure is basically the same as the CFRA procedure.

In an example, the following describes the contention based random access procedure with reference to an example shown in FIG. 3a by using an example in which a terminal device is a UE and a network device is a gNB.

Msg1 transmission: The terminal randomly selects, based on a received system message sent by the network device and an index of a selected SSB, one RO in random access occasions (RACH occasions, ROs) (the ROs may be understood as time-frequency resources used by the terminal device for random access, and the network device preconfigures an association relationship between the ROs and the SSB index) associated with the index of the SSB, to send a preamble (preamble, namely, Msg1). After determining the time-frequency resource, namely, the RO, the UE selects one preamble sequence on the selected RO (where a maximum of 64 preambles can be simultaneously transmitted on one RO, and the UE selects one of the 64 preamble sequences) for sending. Then, the terminal sends the preamble sequence to the network device, where the preamble sequence is carried on a physical random access channel (physical random access channel, PRACH).

Msg2 transmission: After receiving the preamble, the network device sends random access response (Random access response, RAR) information to the terminal, where the random access response RAR, namely, Msg2, includes scheduling information for allocating Msg3, namely, RAR UL grant information. After sending the Msg1, the terminal starts a random access response window, and monitors, in the window, the Msg2 sent by a network side. If the terminal successfully detects the RAR of the terminal, random access succeeds, and the terminal continues to send the Msg3 based on an indication of the RAR. A main function of the Msg3 is to send an RRC connection setup request. If the terminal does not receive the RAR of the terminal, the random access fails, and the terminal re-initiates, based on a backoff parameter indicated by the base station, a random access procedure until a maximum quantity of times of random access is reached.

Msg3 transmission: The Msg3 is sent on a time-frequency resource specified in the Msg2, and is carried on a PUSCH.

Msg4 transmission: Msg4 is mainly used for contention resolution. When a plurality of terminals perform access simultaneously, a terminal to be selected for random access needs to be determined. Specifically, after sending the Msg3, the terminal monitors and receives the Msg4 delivered by the network side, and the Msg4 carries a contention resolution identifier and an air interface parameter configuration for the terminal. If the terminal successfully receives the Msg4, random access succeeds; otherwise, the random access fails. If the random access succeeds, the terminal continues to send Msg5. A main function of the Msg5 is to send an RRC connection setup complete command. If the random access fails, the terminal re-initiates, based on a backoff parameter indicated by the base station, a random access procedure until a maximum quantity of times of random access is reached.

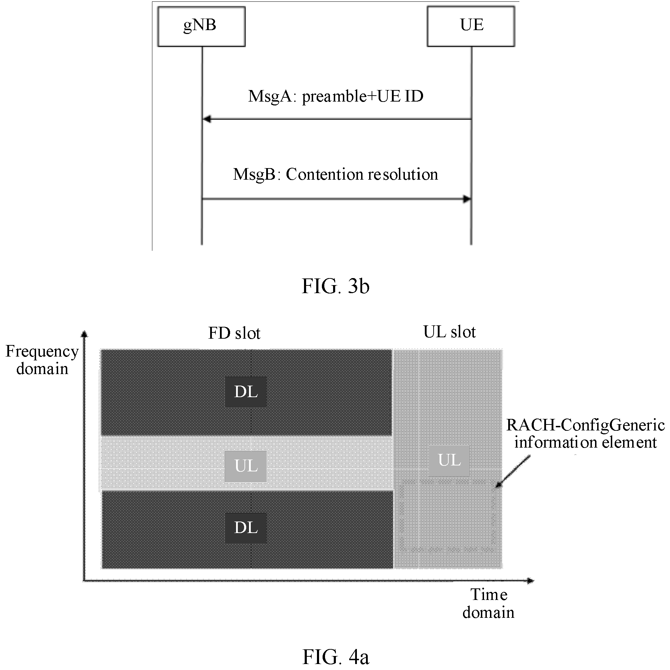

For example, as shown in FIG. 3b, CBRA is used as an example. The type-2 RA procedure is to combine the first four steps into two steps based on the type-1 RA. The terminal simultaneously sends Msg1 and Msg3, which are referred to as MsgA. After detecting the MsgA, the base station performs feedback and sends MsgB.

In addition, in a random access procedure, the UE may send a preamble sequence (preamble) on a random access occasion (RACH occasion, RO). One RO may be considered as a time-frequency resource for transmission of a preamble. One RO may support code division multiplexing transmission of a plurality of preamble sequences. One NR cell supports a plurality of ROs. Different from LTE, a multi-beam operation is introduced in NR. Therefore, transmission is performed based on a beam in a random access procedure in NR. For a UE in an initial access phase, transmission is mainly performed based on an SSB beam. For a UE in a connected state, transmission may be further performed based on a channel state information reference signal (channel state information reference signal, CSI-RS) beam. NR may support the base station in sending SSBs in a plurality of beam directions. For example, in FR1, a maximum of eight SSBs may be supported. The UE may select one SSB and send a PRACH using a beam of the SSB. For how the UE selects an SSB to send a PRACH, if the base station does not configure a reference signal received power (reference signal received power, RSRP) threshold, the UE may select any SSB to send the PRACH; otherwise, the UE selects any SSB from SSBs (if any) whose RSRP exceeds the RSRP threshold to send the PRACH.

For example, the network device may configure a PRACH in a UL slot by using a random access channel configuration generic (RACH-ConfigGeneric) information element in a broadcast message. Then, the terminal device may perform random access through the PRACH in the UL slot.

As shown in FIG. 4a, a horizontal direction represents time domain, a vertical direction represents frequency domain, a left side of the figure shows a full duplex slot (FD slot), and a right side of the figure shows an uplink slot (UL slot). A dashed-line box of the UL slot represents a PRACH resource specified by RACH-ConfigGeneric. For example, time domain position information such as a period, a frame number, a subframe number, a slot number, and a quantity of ROs in a slot of the PRACH in time domain distribution may be obtained by querying Tables 6.3.3.2-2 to 6.3.3.2-4 based on a parameter prach-ConfigurationIndex in the higher layer information element RACH-ConfigGeneric.

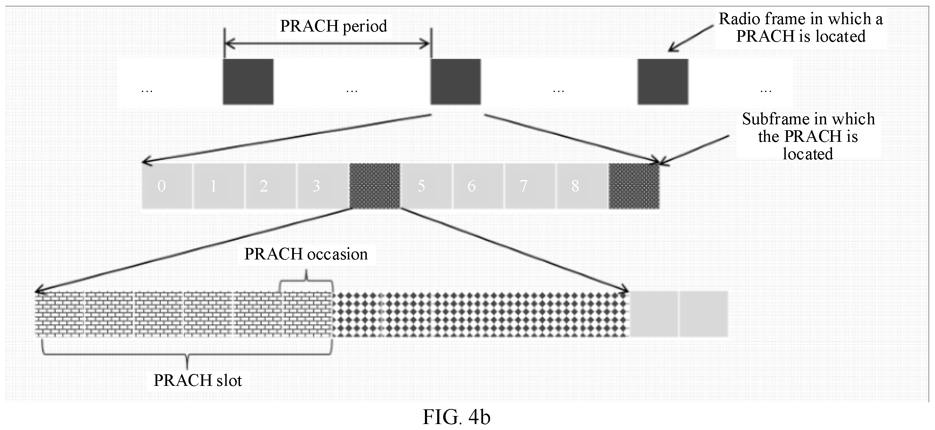

As shown in FIG. 4b, three black blocks at an uppermost layer in the figure are frames in which PRACHs are located, a time domain distance between every two purple blocks is a PRACH period, an intermediate layer includes subframes of a frame in which a PRACH is located, where each block filled with slashes (for example, blocks corresponding to an index 4 and an index 9) is a subframe in which the PRACH is located, and a slot structure of the subframe in which the PRACH is located is shown at a bottom layer, where a 1^{st} black block is a slot in which the PRACH is located, and is referred to as a PRACH slot. The PRACH slot includes six small blocks, and each small block is one RO. In other words, the PRACH slot includes six ROs.

Optionally, a start position and a quantity of times of frequency division multiplexing of the PRACH in frequency domain can be separately obtained based on parameters msg1-FrequencyStart and msg1-FDM in the higher layer information element RACH-ConfigGeneric. This also determines a frequency domain position of the PRACH.

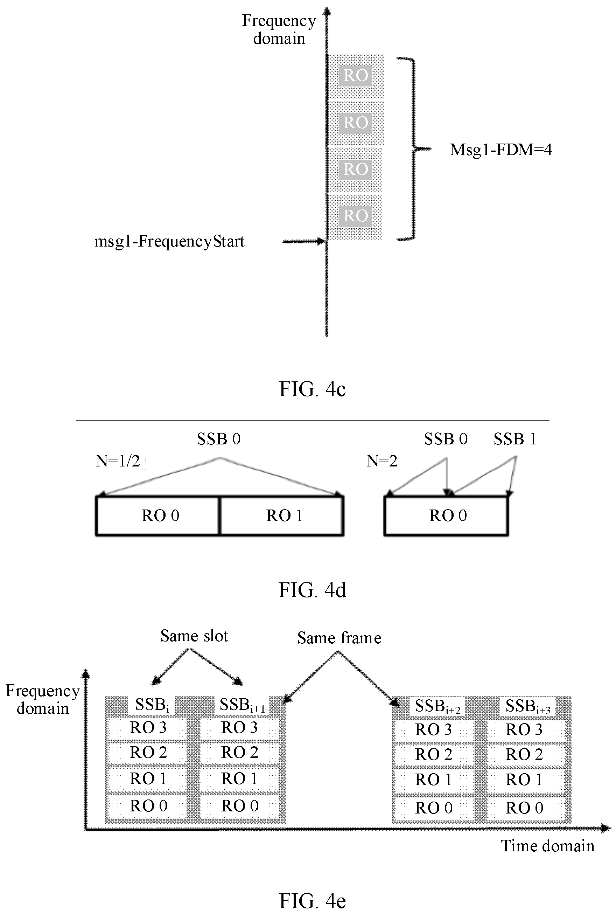

As shown in FIG. 4c, a vertical direction represents frequency domain, each block is one RO, and four ROs are arranged starting from a frequency domain position specified by msg1-FrequencyStart.

In the Msg1 transmission process, the UE may select one RO based on the index of the selected SSB, to transmit the preamble sequence. Therefore, in an existing NR standard, in addition to specifying a position of the PRACH, the network device further needs to specify an RO-SSB mapping relationship (one SSB index may be associated with a plurality of ROs, or a plurality of SSB indexes are associated with one RO).

Specifically, the network device may configure a mapping relationship between Y SSBs and one RO by using a higher layer parameter ssb-perRACH-OccasionAndCB-PreamblesPerSSB. When Y is less than 1, one SSB is associated with 1/Y ROs. When Y is greater than 1, the Y SSBs are associated with one RO (where one SSB is associated with 1/Y ROs).

For example, as shown in FIG. 4d, when Y=1/2, one SSB is associated with two ROs. When Y=2, one RO is associated with two SSBs (two SSBs on one RO are respectively associated with different preambles). Therefore, when one SSB index is associated with a plurality of ROs, the UE selects one of the plurality of ROs, and selects a preamble sequence transmitted on the RO. After an association relationship between the RO and the SSB is determined, RO-SSB mapping may be started. A sequence is first frequency domain, and then time domain, and first same slot, then same frame, and last different frames.

In an example, as shown in FIG. 4e, a horizontal direction represents time domain, and a vertical direction represents frequency domain. When an SSB set used by the base station is {SSBᵢ, SSBᵢ₊₁, SSBᵢ₊₂, SSBᵢ₊₃}, msg1-FDM=4, and Y=1/4, one SSB is associated with four ROs, an RO set is denoted as {RO 1, RO 2, RO 3, RO 4}, and 16 ROs form one complete RO-SSB mapping cycle. A specific RO-SSB mapping sequence is arranged starting from frequency domain corresponding to an RO time domain position. To be specific, the RO 1 to the RO 4 corresponding to the SSBᵢ occupy four RO positions in frequency domain corresponding to a 1^{st} RO time domain position in a start PRACH slot of a same frame, the RO 1 to the RO 4 corresponding to the SSBᵢ₊₁ occupy four RO positions in frequency domain corresponding to a 2^{nd} RO time domain position in the start PRACH slot, the RO 1 to the RO 4 corresponding to the SSBᵢ₊₁ occupy four RO positions in frequency domain corresponding to a 2^{nd} RO time domain position in the start PRACH slot of the same frame, the RO 1 to the RO 4 corresponding to the SSBᵢ₊₂ occupy four RO positions in frequency domain corresponding to a 1^{st} RO time domain position in a 2^{nd} PRACH slot of the same frame, and the RO 1 to the RO 4 corresponding to the SSBᵢ₊₃ occupy four RO positions in frequency domain corresponding to a 2^{nd} RO time domain position in the 2^{nd} PRACH slot of the same frame.

In addition, in the random access procedure, concepts of a mapping cycle and an association period may be further involved, which are separately described below.

Mapping cycle: Mapping of all SSBs sent by the base station to ROs is completed once, which is referred to as one mapping cycle (mapping cycle).

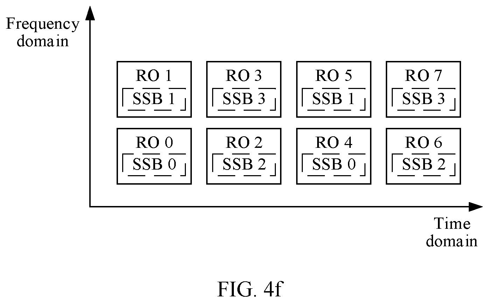

For example, as shown in FIG. 4f, it is assumed that a value of ssb-perRACH-OccasionAndCB-PreamblesPerSSB is 1 (that is, a mapping relationship between Y=1 SSB and one RO is configured, in other words, there is a one-to-one relationship between an RO and an SSB index), a value of msg1-FDM is 2 (that is, a quantity of ROs in one time unit is 2, and a quantity of frequency division ROs (FDM-ROs) is 2), and ${N}_{Tx}^{SSB} = 4$ (that is, a quantity of different SSB indexes of SSBs sent by the network device is 4). In FIG. 4f, four SSB indexes: an SSB 0, an SSB 1, an SSB 2, and an SSB 3 are used as an example. One mapping cycle is formed when the four SSBs are mapped once. It should be understood that in this example, one mapping cycle includes four ROs. For example, an RO 0 to an RO 3 form one mapping cycle, and an RO 4 to an RO 7 form another mapping cycle. Optionally, in this example, the SSB index may be another value, for example, an SSB index 5, an SSB index 7, an SSB index 8, or an SSB index 10, which specifically depends on a configuration of the base station.

Association period: The association period (association period) is an integer multiple of a PRACH configuration period. When the PRACH configuration period is equal to 10 ms, the association period may be 10 ms, 20 ms, 40 ms, 80 ms, or 160 ms (refer to Table 2 below, 38211, and 8.1-1). A specific value is a smallest value in these values, and allows all the sent SSBs to be mapped at least once.

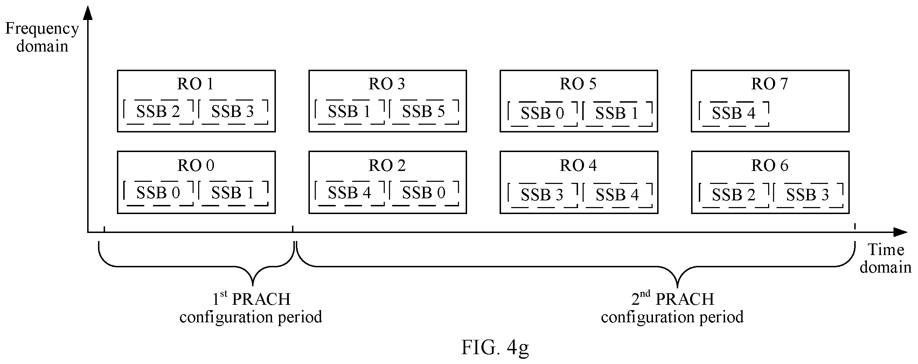

For example, as shown in FIG. 4g, it is assumed that a value of ssb-perRACH-OccasionAndCB-PreamblesPerSSB is 2 (that is, a mapping relationship between Y=2 SSBs and one RO is configured), a value of msg1-FDM is 2 (that is, a quantity of ROs in one time unit is 2), and ${N}_{Tx}^{SSB} = 5$ (that is, a quantity of different SSB indexes of SSBs sent by the network device is 5). It is assumed that a 1^{st} PRACH configuration period includes only an RO 0 and an RO 1, and all SSBs cannot be mapped once in the 1^{st} PRACH configuration period. Therefore, a 2^{nd} PRACH configuration period is needed. It is assumed that the 2^{nd} PRACH configuration period includes an RO 2, an RO 3, an RO 4, an RO 5, an RO 6, and an RO 7, all the SSBs can be mapped at least once in the two PRACH configuration periods, and the two PRACH configuration periods are one association period (for example, two configuration periods, 20 ms).

In addition, in the association period shown in FIG. 4g, after the SSBs are mapped once, some ROs (for example, the RO 3 to the RO 7, and in addition, a position of one SSB remains in the RO 2) remain. In the remaining ROs, the SSBs may be further mapped twice. Therefore, the SSBs are mapped three times in total. Alternatively, it may be understood as that the SSBs are mapped for three rounds, and there are three mapping cycles. In this case, if there are remaining ROs, and not all the SSBs can be mapped to the remaining ROs once, the SSBs are not mapped. If there are some remaining preamble indexes that are on the remaining ROs and to which the SSBs are not mapped, the SSBs are not mapped either. For example, only one SSB is mapped to the RO 7 in FIG. 4g, and there is still one position to which the SSB can be mapped, and the SSB is not mapped.

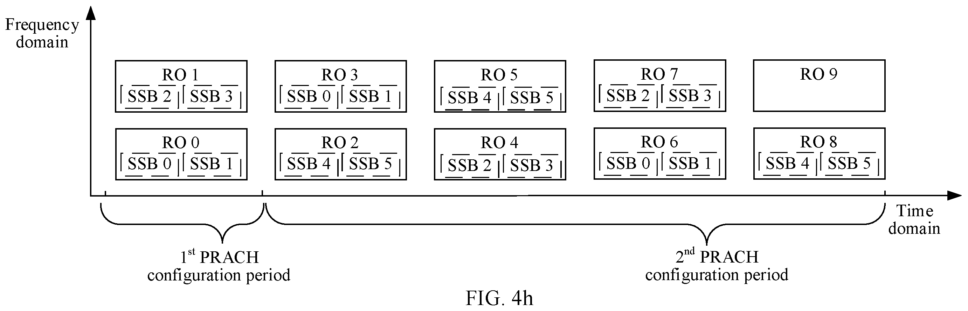

For example, as shown in FIG. 4h, it is assumed that a value of ssb-perRACH-OccasionAndCB-PreamblesPerSSB is 2 (that is, a mapping relationship between Y=2 SSBs and one RO is configured), a value of msg1-FDM is 2 (that is, a quantity of ROs in one time unit is 2), and ${N}_{Tx}^{SSB} = 6$ (that is, a quantity of different SSB indexes of SSBs sent by the network device is 6). It is assumed that a 1^{st} PRACH configuration period includes only an RO 0 and an RO 1, and all SSBs cannot be mapped once in the 1^{st} PRACH configuration period. Therefore, a 2^{nd} PRACH configuration period is needed. It is assumed that the 2^{nd} PRACH configuration period includes an RO 2, an RO 3, an RO 4, an RO 5, an RO 6, and an RO 7, all the SSBs can be mapped at least once in the two PRACH configuration periods, and the two PRACH configuration periods are one association period (for example, two configuration periods, 20 ms).

In addition, in the association period shown in FIG. 4h, after the SSBs are mapped once, some ROs (for example, the RO 3 to the RO 9) remain. In the remaining ROs, the SSBs may be further mapped twice. Therefore, the SSBs are mapped three times in total. Alternatively, it may be understood as that the SSBs are mapped for three rounds, and there are three mapping cycles. In this case, if there are remaining ROs, and not all the SSBs can be mapped to the remaining ROs once, the SSBs are not mapped. If there are some remaining preamble indexes that are on the remaining ROs and to which the SSBs are not mapped, the SSBs are not mapped either. In this case, in the association period including the 1^{st} PRACH configuration period and the 2^{nd} PRACH configuration period, because there are only two remaining positions that can be used to map the SSB, and the two remaining positions are less than or equal to ${N}_{Tx}^{SSB} = 6$, the SSB is not mapped to the RO 9.

**Table 2**

| PRACH configuration period (msec) | Association period (number of PRACH configuration periods) |
|---|---|
| 10 | {1, 2, 4, 8, 16} |
| 20 | {1, 2, 4, 8} |
| 40 | {1, 2, 4} |
| 80 | {1, 2} |
| 160 | {1} |

Association pattern period: The association pattern period (association pattern period) includes one or more association periods, and a maximum association period is 160 ms. Mapping between an SSB and an RO is completely the same, that is, repeated, in association pattern periods.

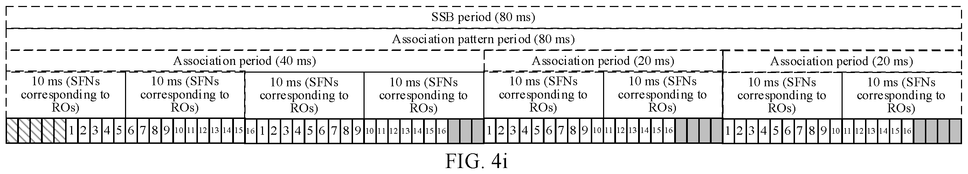

In an example, as shown in FIG. 4i, an example in which an SSB period (SSB period) and an association pattern period corresponding to the SSB period each are 80 ms is used. The association pattern period includes three association periods: one 40 ms association period and two 20 ms association periods.

In the example shown in FIG. 4i, a value of ssb-perRACH-OccasionAndCB-PreamblesPerSSB is 1 (that is, a mapping relationship between Y=1 SSB and one RO is configured, in other words, there is a one-to-one relationship between an RO and an SSB index), and a value of msg1-FDM is 1 (that is, a quantity of ROs in one time unit is 1).

In the example shown in FIG. 4i, one solid-line box represents one RO, where a solid-line block filled with slashes is an invalid RO (invalid RO), a solid-line block with a number is an RO to which an SSB index is mapped and the number of the block identifies the SSB index mapped to the RO, and a solid-line block filled with a gray pattern is a remaining RO, that is, an RO to which no SSB index is mapped. An RO to which no SSB is mapped is considered as an invalid RO. To be specific, the terminal device cannot send a preamble on the RO, and the base station does not receive and detect the preamble on the RO.

For example, the association period of 40 ms includes a total of 40 RO positions. In addition to five invalid ROs in the first 10 ms, there are 35 remaining RO positions to which SSB indexes can be mapped. When a quantity of SSB indexes is 16 (namely, an SSB 1 to an SSB 16), the 35 ROs may be used for two complete rounds of mapping of the SSB indexes, and the remaining three ROs are insufficient to form complete mapping with the SSB indexes. Therefore, in the association period of 40 ms, no SSB index is mapped to the last three ROs in the last 10 ms.

For another example, any association period of 20 ms includes a total of 20 RO positions. When a quantity of SSB indexes is 16 (namely, an SSB 1 to an SSB 16), the 20 ROs may be used for one complete round of mapping of the SSB indexes, and the remaining four ROs are insufficient to form complete mapping with the SSB index. Therefore, in the association period of 20 ms, no SSB index is mapped to the last four ROs in the last 10 ms.

It can be learned from the foregoing content that, in the TDD system, a downlink usually occupies most time resources. In this case, because the terminal device performs uplink transmission on a small quantity of time domain resources, uplink coverage is poor, and a communication delay is also increased. In addition, although a related concept such as SBFD/SFFD has been proposed currently (as described in FIG. 1a to FIG. 1d above), in a current random access procedure, parameters configured by the network device are configured for a resource used only for uplink. Therefore, how to implement random access by using a resource used for uplink and downlink communication in a random access procedure is a technical problem to be urgently resolved.

To resolve the foregoing problem, this application provides a communication method and a related apparatus and device, to reduce latency of a random access procedure. The following provides detailed descriptions with reference to the accompanying drawings.

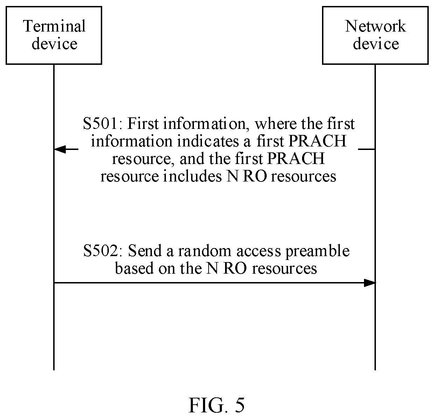

FIG. 5 is a diagram of an implementation of a communication method according to this application. The method includes the following steps.

It should be noted that in FIG. 5, the method is illustrated by using an example in which a terminal device and a network device are used as execution bodies of the interaction illustration. However, the execution bodies of the interaction illustration are not limited in this application. For example, in FIG. 5 and a corresponding implementation, the terminal device that performs S501 and S502 may be the terminal device, may be a chip, a chip system, or a processor that supports the terminal device in implementing the method, or may be a logical module or software that can implement all or some functions of the terminal device. In FIG. 5 and the corresponding implementation, the network device that performs S501 and S502 may be the network device, may be a chip, a chip system, or a processor that supports the network device in implementing the method, or may be a logical module or software that can implement all or some functions of the network device.

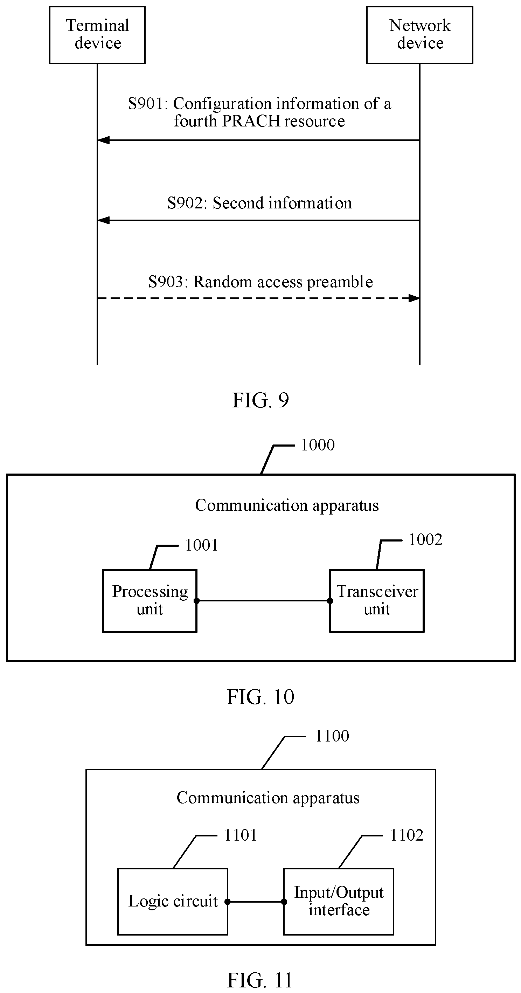

Similarly, in the following implementation process shown in FIG. 9, the method may be performed by using the terminal device and the network device, or may be implemented by using a chip, a chip system, or a processor that supports the terminal device and the network device in implementing the method, or may be a logical module or software that can implement all or some functions of the terminal device and the network device.

S501: The network device sends first information, and correspondingly, the terminal device receives the first information. The first information indicates a first physical random access channel (physical random access channel, PRACH) resource, and a time domain resource of the first PRACH resource is located in one or more time domain units used for uplink and downlink communication. The first PRACH resource includes N random access occasion (random access occasion, RO) resources, the N RO resources are RO resources occupied by M mapping cycles (mapping cycles), each mapping cycle is determined based on an association relationship between L synchronization signal/physical broadcast channel blocks (synchronization signal/physical broadcast channel blocks, SSBs or S-SS/PSBCH blocks) and the N RO resources, and L, N, and M are all positive integers.

S502: The terminal device sends a random access preamble based on the N RO resources.

In this application, a process in which the terminal device sends the random access preamble may be understood as that the terminal device sends a message 1 (message 1, MSG1) or a message A (message A, MSGA) that includes the random access preamble, for example, the signal involved in the random access procedures described in FIG. 3a and FIG. 3b. The random access preamble may be replaced with another term, for example, a preamble, a preamble sequence, a preamble signal, a random access preamble sequence, a random access signal, or a random access preamble signal.

Optionally, in the RO resources in the M mapping cycles, the RO resources included in each mapping cycle may be used for one time of mapping of L different SSB indexes corresponding to the L SSBs. In other words, that the N RO resources are RO resources occupied by the M mapping cycles may be understood as that the N RO resources may be used for M times of mapping of L different SSB indexes corresponding to the L SSBs.

In this application, a resource used for uplink and downlink communication may include both a resource used for uplink transmission and a resource used for downlink transmission. For example, the resource is a subband (subband). The resource used for uplink and downlink communication may include a subband used for uplink transmission and a subband used for downlink transmission. The subband used for uplink transmission and the subband used for downlink transmission are located on a same component carrier.

Optionally, the subband used for uplink transmission and the subband used for downlink transmission include at least one same subcarrier, one or more subcarriers included in the subband used for uplink transmission and one or more subcarriers included in the subband used for downlink transmission are different from each other, or one or more subcarriers included in the subband used for uplink transmission and one or more subcarriers included in the subband used for downlink transmission are the same.

For example, the resource used for uplink and downlink communication may be a subband full duplex (subband full duplex, SBFD) resource or a single frequency full duplex (single frequency full duplex, SFFD) resource. The SBFD resource is used as an example. For one carrier, a frequency resource configuration may include at least a DL subband and a UL subband.

Optionally, to avoid cross-link interference between downlink transmission in the DL subband and uplink transmission in the UL subband, a guard band (guard band) may be further defined between the DL subband and the UL subband. Whether the guard band needs to be explicitly defined and whether transmission can be performed in the guard band are not limited in this application. In addition, whether a guard band exists between the DL subband and the UL subband and if the guard band exists, whether transmission can be performed in the guard band are not limited. Moreover, whether the DL subband and the UL subband may overlap is not limited in this application.

Optionally, for an SBFD configuration, there are two possible configuration manners depending on whether one slot includes both an SBFD symbol and a non-SBFD (non-SBFD) symbol. In this application, the following two configuration manners are not limited. The SBFD symbol may be considered as a symbol configured with SBFD, and the non-SBFD symbol may be considered as a symbol not configured with SBFD.

For example, the SBFD configuration is at a slot level. To be specific, all symbols included in one slot are configured as SBFD symbols or configured as non-SBFD symbols.

For another example, the SBFD configuration is at a symbol level. To be specific, some symbols included in one slot may be configured as SBFD symbols, and the other symbols may be configured as non-SBFD symbols.

In a possible implementation, the first PRACH resource further includes K RO resources, K is an integer, and the K RO resources meet at least one of the following:
the K RO resources are not used for random access;
the K RO resources are not used to carry a random access preamble; or
the K RO resources are invalid RO resources.

Specifically, when the K RO resources in the first PRACH resource other than the N RO resources meet at least one of the foregoing, the terminal device does not send the random access preamble based on the K RO resources, and correspondingly, the network device does not receive and/or detect the random access preamble based on the K RO resources. The N RO resources are RO resources occupied by the M mapping cycles, and the terminal device may traverse, in turn, a beam direction of each SSB in each mapping cycle of the first PRACH resource. Therefore, the K RO resources in the first PRACH resource other than the N RO resources may not be used for transmission of the random access preamble. This can avoid a resource waste and reduce implementation complexity.

Optionally, K is an integer less than $\left⌈N/M\right⌉ , \left⌈N/M\right⌉$ represents rounding up N/M, a quantity of RO resources included in the first PRACH resource is Z, and Z satisfies: $Z = N + K .$

Specifically, when K is an integer less than $\left⌈N/M\right⌉$ and Z=N+K is satisfied, the K RO resources in the first PRACH resource other than the N RO resources are insufficient to form a complete mapping cycle with the L SSBs. In other words, in the Z RO resources in the first PRACH resource, association of a maximum of M mapping cycles is completed. Therefore, association of more mapping cycles can be implemented as much as possible by using the N RO resources in the Z RO resources, and more RO resources are provided in the first PRACH resource as much as possible, to improve the success rate of the random access procedure.

It should be understood that, in the M mapping cycles, each mapping cycle is determined based on the association relationship between the L SSBs and the N RO resources. For example, parameters such as the total quantity Z of RO resources included in the first PRACH resource, a quantity Y of SSB indexes associated with any RO resource (quantities of SSB indexes associated with different RO resources may be the same), and a quantity (namely, a value of L) of different SSBs sent by the network device may be configured by using information sent by the network device. Correspondingly, the terminal device or the network device determines M based on these parameters, and may further determine N (for example, $N = M * \left⌈M∗\frac{L}{Y}\right⌉$, where $\left⌈M∗\frac{L}{Y}\right⌉$ represents a result of rounding up $M ∗ \frac{L}{Y}$).

Optionally, a value of M satisfies $M \leq \left⌊Z/\left(L/Y\right)\right⌋$, which indicates that the value of M is less than or equal to a result of rounding down Z/(L/Y), that is, a maximum value of M is $\left⌊Z/\left(L/Y\right)\right⌋$.

Optionally, the value of M is determined in another manner.

For example, after mapping between the Z ROs and the L SSBs is completed, an integer quantity of mapping cycles may be obtained, and a subsequent RO through which one mapping cycle cannot be formed is considered as an invalid RO. In other words, M is a maximum integer obtained by performing mapping between the Z ROs and the L SSBs. The invalid RO means that the RO is not used to send a preamble, there is no mapping between an SSB and an RO on the RO, and subsequent mapping between an RO and an SSB is not affected.

For another example, after mapping between the Z ROs and the L SSBs is completed, the first one or more mapping cycles may be obtained, and a subsequent RO is considered as invalid. In other words, the value of M is a quantity of mapping cycles.

In an example, a value of Z is 8, a value of Y is 1 (the value of Y may be determined based on ssb-perRACH-OccasionAndCB-PreamblesPerSSB), and a value of L is 4 (the value of L may be determined based on ${N}_{Tx}^{SSB}$). In the example shown in FIG. 4f, the terminal device may determine, based on these parameters, that in eight (namely, Z=8) RO resources (namely, the RO 0 to the RO 7 in FIG. 4f) included in the first PRACH resource, a quantity of SSB indexes associated with each RO resource is 1 (namely, Y=1), and a quantity of different SSBs sent by the network device is 4 (namely, L=4). Correspondingly, the terminal device or the network device may determine, based on these parameters, that the first PRACH resource includes a maximum of two (that is, a maximum value of M satisfies $M = \left⌊Z/\left(L/Y\right)\right⌋ = \left⌊8/\left(4/1\right)\right⌋ = 2$) mapping cycles, and the first PRACH resource includes a maximum of eight (that is, $N = \left⌈M∗\frac{L}{Y}\right⌉ = \left⌈2∗\frac{4}{1}\right⌉ = 8$) RO resources.

In another example, a value of Z is 8, a value of Y is 2 (the value of Y may be determined based on ssb-perRACH-OccasionAndCB-PreamblesPerSSB), and a value of L is 5 (the value of L may be determined based on ${N}_{Tx}^{SSB}$). In the example shown in FIG. 4g, the terminal device may determine, based on these parameters, that in eight (namely, Z=8) RO resources (namely, the RO 0 to the RO 7 in FIG. 4g) included in the first PRACH resource, a quantity of SSB indexes associated with each RO resource is 2 (namely, Y=2), and a quantity of different SSBs sent by the network device is 5 (namely, L=5). Correspondingly, the terminal device or the network device may determine, based on these parameters, that the first PRACH resource includes a maximum of three (that is, $M = \left⌊Z/\left(L/Y\right)\right⌋ = \left⌊8/\left(5/2\right)\right⌋ = 3$) mapping cycles, and the first PRACH resource includes a maximum of eight (that is, $N = \left⌈M∗\frac{L}{Y}\right⌉ = \left⌈3∗\frac{5}{2}\right⌉ = 8$) RO resources. A quantity of SSB indexes that are mapped to a last RO resource in the eight RO resources is 1.

In another example, a value of Z is 10, a value of Y is 2 (the value of Y may be determined based on ssb-perRACH-OccasionAndCB-PreamblesPerSSB), and a value of L is 6 (the value of L may be determined based on ${N}_{Tx}^{SSB}$). In the example shown in FIG. 4h, the terminal device may determine, based on these parameters, that in 10 (namely, Z=10) RO resources included in the first PRACH resource, a quantity of SSB indexes associated with each RO resource is 2 (namely, Y=2), and a quantity of different SSBs sent by the network device is 6 (namely, L=6). Correspondingly, the terminal device or the network device may determine, based on these parameters, that the first PRACH resource includes a maximum of three (that is, $M = \left⌊Z/\left(L/Y\right)\right⌋ = \left⌊10/\left(6/2\right)\right⌋ = 3$) mapping cycles, and the first PRACH resource includes a maximum of nine (that is, $N = \left⌈M∗\frac{L}{Y}\right⌉ = \left⌈3∗\frac{6}{2}\right⌉ = 9$) RO resources. No SSB index is mapped to a last RO resource in the 10 RO resources or the last RO resource is an invalid RO resource.

Based on the technical solution shown in FIG. 5, after the terminal device receives, in step S501, the first information indicating the first PRACH resource, the terminal device may send, in step S502, the random access preamble based on the N RO resources included in the first PRACH resource. The time domain resource of the first PRACH resource is located in the one or more time domain units used for uplink and downlink communication. In other words, the one or more time domain units may be used for both uplink communication and downlink communication. In this manner, the terminal device can send the random access preamble based on the first PRACH resource used for uplink and downlink communication, so that the terminal device can initiate random access in a random access procedure on a resource used for uplink and downlink communication, thereby improving uplink coverage and reducing latency of the random access procedure.

In addition, the terminal device sends the random access preamble based on at least the N RO resources in the first PRACH resource, and the N RO resources are RO resources occupied by the M mapping cycles, where M is a positive integer. Each mapping cycle is determined based on the association relationship between the L SSBs and the N RO resources. To be specific, in each mapping cycle, mapping between the RO resources and L different SSB indexes corresponding to the L SSBs is sequentially performed once, and any SSB may be associated with (or mapped to) one or more ROs. In other words, in the first PRACH resource used for uplink and downlink communication, the N RO resources used to send the random access preamble include an integer quantity of mapping cycles, that is, the N RO resources used to send the random access preamble are associated with the L SSBs, to form the integer quantity of mapping cycles. Because when the network device sends the L SSBs, beam directions of different SSBs may be different, in the foregoing manner, the terminal device may traverse, in turn, a beam direction of each SSB in each mapping cycle of the first PRACH resource. Therefore, in each mapping cycle, the terminal device may determine a corresponding RO resource based on an SSB index of any SSB selected from the L SSBs, to improve a success rate of the random access procedure, and facilitate a subsequent beam-based communication process.

In the implementation process shown in FIG. 5, the terminal device may send the random access preamble on the first PRACH resource used for uplink and downlink communication. To be compatible with another terminal device (denoted as a first terminal device in the following) that does not support communication on the resource used for uplink and downlink communication, the network device may further need to configure an RO resource in addition to the first PRACH resource used for uplink and downlink communication, so that the first terminal device can implement random access based on the RO resource.

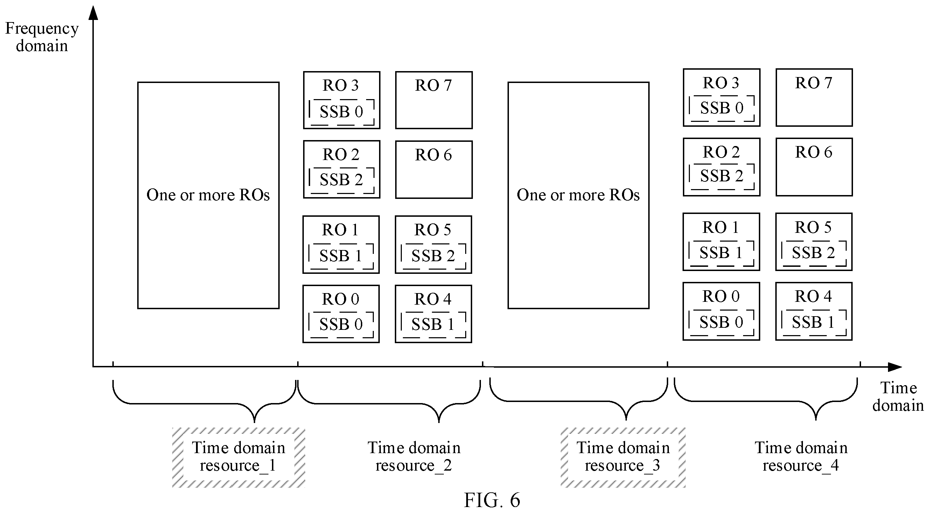

In an example, as shown in FIG. 6, in time domain, a resource used for uplink communication includes a time domain resource_1 and a time domain resource_3. In the two time resources, the first terminal device can implement random access based on one or more included ROs. Correspondingly, in time domain, the resource used for uplink communication includes a time domain resource_2 and a time domain resource_4, and a terminal device (denoted as a second terminal device in the following) that supports communication on the resource used for uplink and downlink communication may implement random access by using RO resources in the first PRACH resource (where the first PRACH resource includes the time domain resource_2 and/or the time domain resource_4) based on the technical solution shown in FIG. 5.

For example, the first PRACH resource includes the time domain resource_2. In FIG. 6, for example, a value of Z is 8, a value of Y is 1 (the value of Y may be determined based on ssb-perRACH-OccasionAndCB-PreamblesPerSSB), and a value of L is 3 (the value of L may be determined based on ${N}_{Tx}^{SSB}$). The terminal device may determine, based on these parameters, that in eight (namely, Z=8) RO resources (namely, an RO 0 to an RO 7 in FIG. 6) included in the first PRACH resource, a quantity of SSB indexes associated with each RO resource is 1 (namely, Y=1), and a quantity of different SSBs sent by the network device is 3 (namely, L=3). Correspondingly, the terminal device or the network device may determine, based on these parameters, that the first PRACH resource includes a maximum of two (that is, $M = \left⌊Z/\left(L/Y\right)\right⌋ = \left⌊8/\left(3/1\right)\right⌋ = 2$) mapping cycles, and the first PRACH resource includes a maximum of six (that is, N=M*(L/Y)=2*(3/1) = 6) RO resources. In other words, the second terminal device does not send a random access preamble on the RO 6 or the RO 7 in the time domain resource_2, that is, the RO 6 or the RO 7 is an invalid RO.

In a possible implementation, to reduce a random access delay as much as possible, an effective solution is to provide more RO resources. For example, in addition to initiating random access on RO resources in the time domain resource_2 and the time domain resource_4 shown in FIG. 6, the second terminal device also has a communication capability on the time domain resource_1 and the time domain resource_3 shown in FIG. 6. Therefore, the terminal device can also initiate random access on RO resources in the time domain resource_1 and the time domain resource_3 shown in FIG. 6.

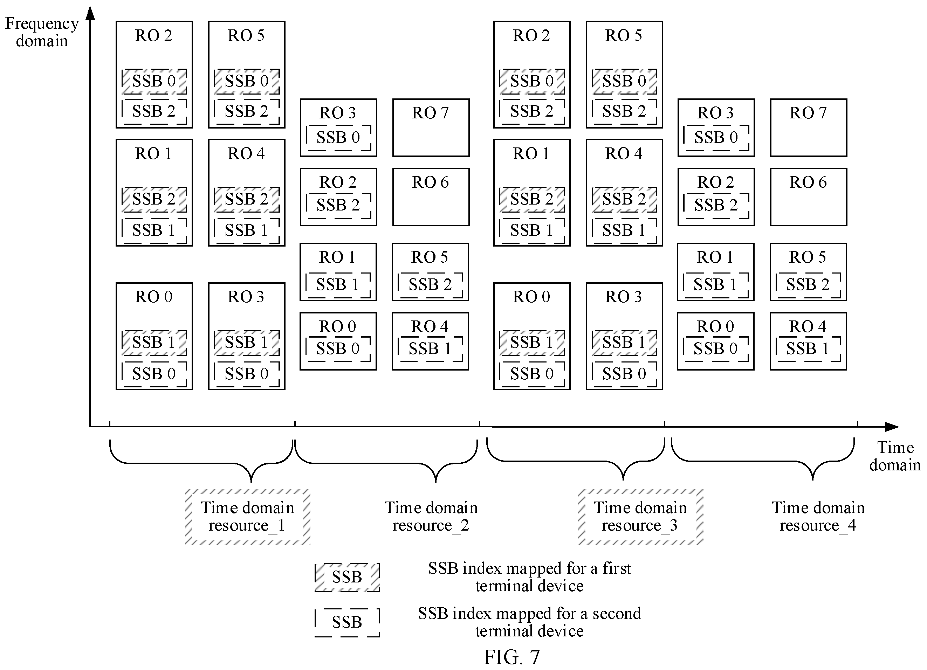

For example, as shown in FIG. 7, quantities of RO resources in the time domain resource_1 and the time domain resource_3 each are 6 (namely, an RO 0 to an RO 5). The communication manner shown in FIG. 6 is still used. The second terminal device may send a random access preamble on six RO resources included in the time domain resource_1. For example, the second terminal device sends, on an RO 0 resource, a random access preamble corresponding to an SBB 0, and sends, on an RO 1 resource, a random access preamble corresponding to an SBB 1. In this manner, latency of random access of the second terminal device can be further reduced.

However, in the example shown in FIG. 7, the first terminal device may also send a random access preamble on the time domain resource_1. However, it can be learned from the examples shown in FIG. 1b and FIG. 1c that resource sizes and resource positions of a resource used for uplink communication (namely, an UL resource) and a resource used for uplink and downlink communication (namely, an SBFD or FD resource) may be independently configured. As a result, an SSB-RO mapping result of the first terminal device on the UL resource may be different from an SSB-RO mapping result of the second terminal device on the UL resource. This causes a conflict.

For example, as shown in FIG. 7, it is assumed that the first terminal device determines that in the time domain resource_1, a value of Z is 6, a value of Y is 1 (the value of Y may be determined based on ssb-perRACH-OccasionAndCB-PreamblesPerSSB), and a value of L is 3 (the value of L may be determined based on ${N}_{Tx}^{SSB}$).

An SSB index mapped to the RO 0 in the time domain resource_1 for the first terminal device may be an SSB 1, and an SSB index mapped to the RO 0 in the time domain resource_1 for the second terminal device may be an SSB 0. For example, the first terminal device considers that communication quality in a beam direction corresponding to the SSB 1 is high, and the second terminal device considers that communication quality in a beam direction corresponding to the SSB 0 is high. Because available preamble sequences on one RO resource are the same, the first terminal device and the second terminal device may initiate random access on the RO 0 by using a same preamble sequence.

However, for the network device, because the network device cannot identify, in a random access preamble transmission process, whether the terminal device supports uplink and downlink communication, the network device may subsequently make a response (for example, send MSG 2) based on the beam direction of the SSB 0. As a result, the first terminal device may determine, based on the response, that the random access fails, and then re-initiate random access. The network device may also make a response (for example, send the MSG 2) based on the beam direction of the SSB 1. As a result, the second terminal device may determine, based on the response, that the random access fails, and then re-initiate random access. Regardless of the response made by the network device, the first terminal device or the second terminal device may fail to obtain the response based on a corresponding beam. Consequently, the random access fails and random access is re-initiated. This greatly increases a random access delay. Similarly, a similar problem may occur on any RO resource in the time domain resource_1 and the time domain resource_3.

Therefore, to resolve the foregoing problem, the following further describes the technical solution shown in FIG. 5 in some implementations.

In a possible implementation, in the technical solution shown in FIG. 5, a time domain resource of a second PRACH resource following the time domain resource occupied by the first PRACH resource is located in one or more time domain units used for uplink communication, the second PRACH resource includes P RO resources, and P is a positive integer; and/or a time domain resource of a third PRACH resource preceding the time domain resource occupied by the first PRACH resource is located in one or more time domain units used for uplink communication, the third PRACH resource includes Q RO resources, and Q is a positive integer.

That the terminal device sends the random access preamble based on the N RO resources includes: The terminal device sends the random access preamble based on the N RO resources and at least one of the P RO resources and the Q RO resources, where in a time domain resource, an SSB index associated with a last RO resource in the N RO resources and an SSB index associated with a 1^{st} RO resource in the P RO resources are consecutive; and/or in a time domain resource, an SSB index associated with a 1^{st} RO resource in the N RO resources and an SSB index associated with a last RO resource in the Q RO resources are consecutive.

Specifically, the terminal device may send the random access preamble on the resource (for example, the first PRACH resource) used for uplink and downlink communication, and can also send the random access preamble on a resource (for example, the second PRACH resource and/or the third PRACH resource) used for uplink communication, so that uplink resources used for random access can be increased, uplink coverage is improved by providing more random access resources, and a random access delay is reduced.

In addition, in the second PRACH resource and the third PRACH resource, an SSB index associated with either of the two resources and an SSB index associated with the first PRACH are consecutive. Because a terminal device (for example, a first terminal device) that does not support communication on the resource used for uplink and downlink communication can send a random access preamble on the second PRACH resource or the third PRACH resource, in the foregoing manner, a terminal device (for example, a second terminal device) that supports communication on the resource used for uplink and downlink communication can reuse the SSB index associated with the second PRACH resource or the third PRACH resource. In this way, configuration overhead can be reduced, and a conflict that occurs because the first terminal device and the second terminal device are associated with different SSB indexes in the second PRACH resource (or the third PRACH resource) can also be avoided, thereby reducing an uplink access delay.

In this application, the resource used for uplink communication is a resource used for uplink transmission. For example, the resource used for uplink communication may be a frequency band, a subband, or the like used for uplink transmission. For example, the resource used for uplink communication may be a UL resource.

Optionally, the first PRACH resource and the second PRACH resource may be adjacent resources, and/or the first PRACH resource and the third PRACH resource may be adjacent resources. For example, the first PRACH resource meets any one or more of the following:
an index of a start time unit of the time domain resource of the first PRACH resource and an index of an end time unit of the time domain resource of the third PRACH resource are consecutive;
an index of an end time unit of the time domain resource of the first PRACH resource and an index of a start time unit of the time domain resource of the second PRACH resource are consecutive;
another resource between the start time unit of the time domain resource of the first PRACH resource and the end time unit of the time domain resource of the third PRACH resource is any resource (for example, a DL resource) of a non-PRACH resource; and
another resource between the end time unit of the time domain resource of the first PRACH resource and the start time unit of the time domain resource of the second PRACH resource is any resource (for example, a DL resource) of a non-PRACH resource.

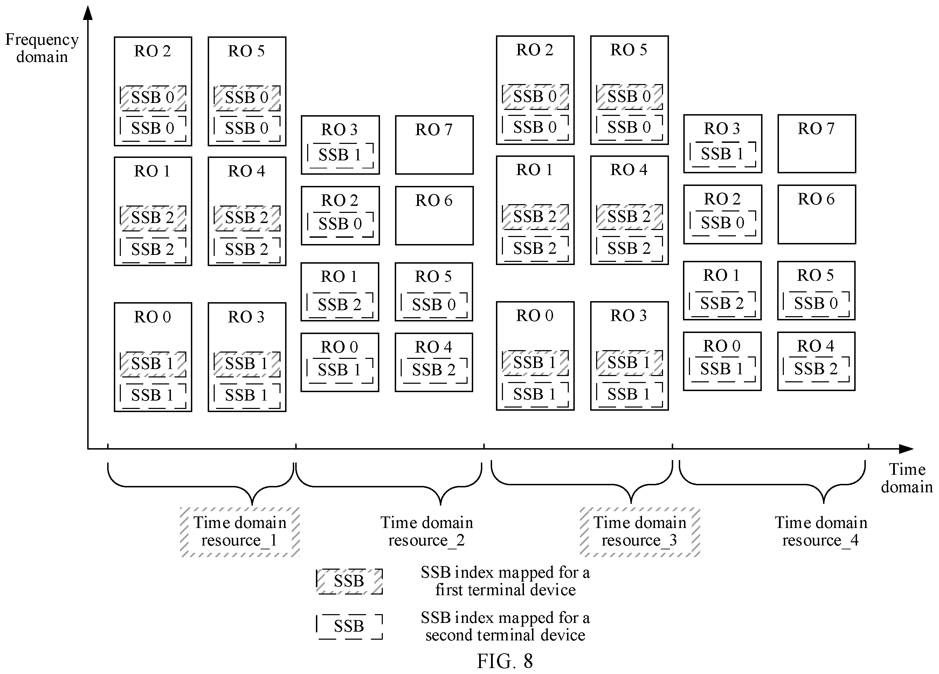

For example, as shown in FIG. 8, the first PRACH resource is a time domain resource_2 in FIG. 8, the second PRACH resource is a time domain resource_3, and the second PRACH resource is a time domain resource_1.

In the time domain resource_1, an SSB-RO mapping manner of the second terminal device is the same as that of the first terminal device. In addition, for the second terminal device, in the time domain resource_2, when an integer multiple of mapping cycles are formed, an SSB index (namely, an SSB 0) mapped to a last RO resource (namely, an RO 5) in the time domain resource_1 and an SSB index (namely, an SSB 1) mapped to a 1^{st} RO resource (namely, an RO 0) in the time domain resource_2 are consecutive.

Similarly, in the time domain resource_3, an SSB-RO mapping manner of the second terminal device is the same as that of the first terminal device. In addition, for the second terminal device, in the time domain resource_2, when an integer multiple of mapping cycles are formed, an SSB index (namely, an SSB 0) mapped to a last RO resource (namely, an RO 5) in the time domain resource_2 and an SSB index (namely, an SSB 1) mapped to a 1^{st} RO resource (namely, an RO 0) in the time domain resource_3 are consecutive.

In this manner, the SSO-RO mapping manners of the first terminal device and the second terminal device in the time domain resource_1 and the time domain resource_3 are the same. This can provide more RO resources for the second terminal device to reduce an uplink access delay, and can also resolve the problem of the conflict mentioned in the process shown in FIG. 7.

In a possible implementation, a time domain resource of a second PRACH resource following the time domain resource occupied by the first PRACH resource is located in one or more time domain units used for uplink communication; the second PRACH resource includes P RO resources; P is a positive integer; the second PRACH resource is not used for random access of a second terminal device, or the second PRACH resource is not used to carry a random access preamble of the second terminal device; and the second terminal device is a device that supports communication on a time domain resource used for uplink and downlink communication; and/or
a time domain resource of a third PRACH resource preceding the time domain resource occupied by the first PRACH resource is located in one or more time domain units used for uplink communication; the third PRACH resource includes Q RO resources; Q is a positive integer; and the third PRACH resource is not used for the random access of the second terminal device, or the third PRACH resource is not used to carry the random access preamble of the second terminal device.

Specifically, the terminal device may send the random access preamble on the resource (for example, the first PRACH resource) used for uplink and downlink communication, and the terminal device does not send the random access preamble on the resource (for example, the second PRACH resource and/or the third PRACH resource) used for uplink communication. Because the terminal device (for example, the first terminal device) that does not support communication on the resource used for uplink and downlink communication can send the random access preamble on the second PRACH resource or the third PRACH resource, in the foregoing manner, a conflict that occurs because the first terminal device and the second terminal device are associated with different SSB indexes in the second PRACH resource (or the third PRACH resource) can be avoided, thereby reducing an uplink access delay.

For example, in the scenario shown in FIG. 7, in the foregoing implementation process, the second terminal device does not send the random access preamble on the time domain resource_1 and the time domain resource_3. In this manner, the conflict problem mentioned in the process shown in FIG. 7 can be resolved.

In a possible implementation, a first association period (association period) and a second association period are the same (for a definition of the association period, refer to the descriptions in FIG. 4g and FIG. 4h); and the first association period is an association period between an SSB and an RO resource in one or more time domain units used for uplink communication, and the first association period is an association period between an SSB and an RO resource in one or more time domain units used for uplink and downlink communication. Specifically, the first association period between an SSB and an RO resource in the one or more time domain units used for uplink communication and the second association period between an SSB and an RO resource in the one or more time domain units used for uplink and downlink communication may be determined in a same manner. In other words, a manner of determining an association period on a time domain resource used for uplink and downlink communication may be the same as a manner of determining an association period on a time domain resource used for uplink communication. This can reduce configuration overhead of the association period and reduce implementation complexity.

In a possible implementation, a first association pattern period (association pattern period) and a second association pattern period are the same (for a definition of the association period, refer to the foregoing descriptions); and the first association pattern period is an association pattern period between an SSB and an RO resource in one or more time domain units used for uplink communication, and the second association pattern period is an association pattern period between an SSB and an RO resource in one or more time domain units used for uplink and downlink communication. Specifically, the first association pattern period between an SSB and an RO resource in the one or more time domain units used for uplink communication and the second association pattern period between an SSB and an RO resource in the one or more time domain units used for uplink and downlink communication may be determined in a same manner. In other words, a manner of determining an association pattern period on a time domain resource used for uplink and downlink communication may be the same as a manner of determining an association pattern period on a time domain resource used for uplink communication. This can reduce configuration overhead of the association pattern period and reduce implementation complexity.

In a possible implementation, the method further includes: The terminal device receives second information, where the second information indicates an association relationship between an SSB and a first random access preamble set transmitted on a fourth PRACH resource, a time domain resource of the fourth PRACH resource is located in one or more time domain units used for uplink communication, the first random access preamble set is used for random access of a first terminal device, and the first terminal device is a terminal device that does not support communication on the first PRACH resource. A random access preamble included in a second random access preamble set transmitted on the fourth PRACH resource is used for random access of a second terminal device, the second terminal device is a terminal device that supports communication on the first PRACH resource, and at least one random access preamble included in the second random access preamble set is different from at least one random access preamble included in the first random access preamble set.

Specifically, the terminal device may receive the second information, and determine, based on the second information, the association relationship between an SSB and the first random access preamble set transmitted on the fourth PRACH resource. In addition, the fourth PRACH resource may be further used for transmission of the second random access preamble set, the first random access preamble set is used for random access of a first terminal device, and the second terminal device is a terminal device that supports communication on the first PRACH resource. In addition, at least one random access preamble included in the second random access preamble set is different from at least one random access preamble included in the first random access preamble set. In this manner, all terminal devices with different communication capabilities can initiate random access on a PRACH resource used for uplink communication, and different terminal devices are distinguished by using different random access preamble sets, so that a conflict caused by use of a same random access preamble when the first terminal device and the second terminal device are associated with different SSB indexes in the fourth PRACH resource can be avoided.

Optionally, the second information and the first information may be carried in a same message/same signaling, or may be carried in different messages/different signaling. This is not limited herein.

Optionally, any random access preamble included in the second random access preamble set is different from any random access preamble included in the first random access preamble set, that is, the second random access preamble set and the first random access preamble set are different from each other. In this manner, terminal devices with different communication capabilities can implement random access on a time domain resource used for uplink communication by using different random access preambles, thereby avoiding the foregoing conflict as much as possible.

For example, in the scenario shown in FIG. 7, in the foregoing implementation process, the first terminal device and the second terminal device may map different SSB indexes to a same RO in the time domain resource_1 or the time domain resource_3. However, when the at least one random access preamble included in the second random access preamble set used by the second terminal device is different from the at least one random access preamble included in the first random access preamble set used by the first terminal device, the network device can distinguish between different terminal devices by using different random access preambles. For example, when a random access preamble parsed by the network device on the RO 0 in the time domain resource_1 belongs to the first random access preamble set, the network device may subsequently make a response based on the SSB 1, and may subsequently communicate with the first terminal device by using the SSB 1. For another example, when a random access preamble parsed by the network device on the RO 0 in the time domain resource_1 belongs to the second random access preamble set, the network device may subsequently make a response based on the SSB 0, and may subsequently communicate with the second terminal device by using the SSB 0. In this manner, more RO resources can be provided for the second terminal device to reduce the uplink access delay, and the conflict problem mentioned in the process shown in FIG. 7 can also be resolved.

In a possible implementation, in the method shown in FIG. 5, the method further includes: The terminal device receives third information, where the third information indicates an association relationship between the second random access preamble set and an SSB; or an association relationship between the second random access preamble set and an SSB is predefined. Specifically, the terminal device can determine the association relationship between the second random access preamble set and an SSB in any one of the foregoing manners, and send the random access preamble on the fourth PRACH resource based on the association relationship, so that the network device can determine, based on the received random access preamble, a beam direction corresponding to an SSB selected by the terminal device, thereby facilitating a subsequent beam-based communication process.

Optionally, the third information and the first information may be carried in a same message/same signaling, or may be carried in different messages/different signaling. This is not limited herein.

In a possible implementation, in the method shown in FIG. 5, the method further includes: The terminal device receives fourth information, where the fourth information indicates an association relationship between an SSB and a third random access preamble set carried on the first PRACH resource, and a random access preamble included in the third random access preamble set is used for the random access of the second terminal device; or an association relationship between the third random access preamble set and an SSB is predefined. Specifically, the terminal device can determine the association relationship between the third random access preamble set and an SSB in any one of the foregoing manners, and send the random access preamble on the first PRACH resource based on the association relationship, so that the network device can determine, based on the received random access preamble, a beam direction corresponding to an SSB selected by the terminal device, thereby facilitating a subsequent beam-based communication process.

Optionally, the fourth information and the first information may be carried in a same message/same signaling, or may be carried in different messages/different signaling. This is not limited herein.

Optionally, the third random access preamble set meets any one of the following:
a random access preamble included in the third random access preamble set includes at least a random access preamble included in the second random access preamble set;
a random access preamble included in the third random access preamble set is the same as a random access preamble included in the second random access preamble set; or
a random access preamble included in the third random access preamble set includes at least a random access preamble included in the first random access preamble set and a random access preamble included in the second random access preamble set.

In a possible implementation, in the method shown in FIG. 5, the method further includes: The terminal device receives fifth information, where the fifth information indicates a quantity X of random access preambles corresponding to each of one or more RO resources included in the fourth PRACH resource, and X meets any one of the following:
X is greater than or equal to a sum of a quantity of random access preambles included in the first random access preamble set and a quantity of random access preambles included in the second random access preamble set;
X is greater than or equal to a sum of a quantity of random access preambles corresponding to a first SSB set and a quantity of random access preambles corresponding to a second SSB set, where the first SSB set is a set of SSBs of the first terminal device on each RO resource, and the second SSB set is a set of SSBs of the second terminal device on each RO resource; and
X is greater than or equal to a quantity of random access preambles corresponding to a third SSB set, where the third SSB set is a union set of the first SSB set and the second SSB set.

Specifically, the terminal device may further receive the fifth information, and determine, based on the fifth information, the quantity X of random access preambles corresponding to each of the one or more RO resources included in the fourth PRACH resource. In addition, the quantity X may meet any one of the foregoing. In this manner, the terminal device can send the X random access preambles specified by the fifth information, to improve the success rate of the random access procedure.

Optionally, the fifth information and the first information may be carried in a same message/same signaling, or may be carried in different messages/different signaling. This is not limited herein.

FIG. 9 is a diagram of another implementation of a communication method according to this application. The method includes the following steps.

S901: A network device sends configuration information of a fourth PRACH resource, and correspondingly, a terminal device receives the configuration information of the fourth PRACH resource. A time domain resource of the fourth PRACH resource is located in one or more time domain units used for uplink communication.

S902: The network device sends second information, and correspondingly, the terminal device receives the second information. The second information indicates an association relationship between an SSB and a first random access preamble set transmitted on the fourth PRACH resource, a random access preamble included in the first random access preamble set is used for random access of a first terminal device, and the first terminal device is a terminal device that does not support communication on the first PRACH resource.

In addition, a random access preamble included in a second random access preamble set transmitted on the fourth PRACH resource is used for random access of a second terminal device, the second terminal device is a terminal device that supports communication on the first PRACH resource, and at least one random access preamble included in the second random access preamble set is different from at least one random access preamble included in the first random access preamble set.

S903: The terminal device sends a random access preamble.

Step S903 is an optional step.

Optionally, any random access preamble included in the second random access preamble set is different from any random access preamble included in the first random access preamble set, that is, the second random access preamble set and the first random access preamble set are different from each other. In this manner, terminal devices with different communication capabilities can implement random access on a time domain resource used for uplink communication by using different random access preambles, thereby avoiding the foregoing conflict as much as possible.

In a possible implementation, in the method shown in FIG. 9, the method further includes: The terminal device receives third information, where the third information indicates an association relationship between the second random access preamble set and an SSB; or an association relationship between the second random access preamble set and an SSB is predefined. Specifically, the terminal device can determine the association relationship between the second random access preamble set and an SSB in any one of the foregoing manners, and send the random access preamble on the fourth PRACH resource based on the association relationship, so that the network device can determine, based on the received random access preamble, a beam direction corresponding to an SSB selected by the terminal device, thereby facilitating a subsequent beam-based communication process.

In a possible implementation, in the method shown in FIG. 9, the method further includes: The terminal device receives fourth information, where the fourth information indicates an association relationship between an SSB and a third random access preamble set carried on the first PRACH resource, and a random access preamble included in the third random access preamble set is used for the random access of the second terminal device; or an association relationship between the third random access preamble set and an SSB is predefined. Specifically, the terminal device can determine the association relationship between the third random access preamble set and an SSB in any one of the foregoing manners, and send the random access preamble on the first PRACH resource based on the association relationship, so that the network device can determine, based on the received random access preamble, a beam direction corresponding to an SSB selected by the terminal device, thereby facilitating a subsequent beam-based communication process.

Optionally, the third random access preamble set meets any one of the following:
a random access preamble included in the third random access preamble set includes at least a random access preamble included in the second random access preamble set;
a random access preamble included in the third random access preamble set is the same as a random access preamble included in the second random access preamble set; or
a random access preamble included in the third random access preamble set includes at least a random access preamble included in the first random access preamble set and a random access preamble included in the second random access preamble set.

In a possible implementation, in the method shown in FIG. 9, the method further includes: The terminal device receives fifth information, where the fifth information indicates a quantity X of random access preambles corresponding to each of one or more RO resources included in the fourth PRACH resource, and X meets any one of the following:
X is greater than or equal to a sum of a quantity of random access preambles included in the first random access preamble set and a quantity of random access preambles included in the second random access preamble set;
X is greater than or equal to a sum of a quantity of random access preambles corresponding to a first SSB set and a quantity of random access preambles corresponding to a second SSB set, where the first SSB set is a set of SSBs of the first terminal device on each RO resource, and the second SSB set is a set of SSBs of the second terminal device on each RO resource; and
X is greater than or equal to a quantity of random access preambles corresponding to a third SSB set, where the third SSB set is a union set of the first SSB set and the second SSB set.

Specifically, the terminal device may further receive the fifth information, and determine, based on the fifth information, the quantity X of random access preambles corresponding to each of the one or more RO resources included in the fourth PRACH resource. In addition, the quantity X may meet any one of the foregoing. In this manner, the terminal device can send the X random access preambles specified by the fifth information, to improve the success rate of the random access procedure.

Based on the technical solution shown in FIG. 9, the terminal device may receive the second information in step S902, and determine, based on the second information, an association relationship between an SSB and a first random access preamble set transmitted on a fourth PRACH resource. In addition, the fourth PRACH resource may be further used for transmission of a second random access preamble set, the first random access preamble set is used for random access of a first terminal device, and the second terminal device is a terminal device that supports communication on the first PRACH resource. In addition, at least one random access preamble included in the second random access preamble set is different from at least one random access preamble included in the first random access preamble set. In this manner, all terminal devices with different communication capabilities can initiate random access on a PRACH resource used for uplink communication, and different terminal devices are distinguished by using different random access preamble sets, so that a conflict (for example, the conflict problem described in FIG. 7) caused by use of a same random access preamble when the first terminal device and the second terminal device are associated with different SSB indexes in the fourth PRACH resource can be avoided.

It should be noted that, in the method shown in FIG. 9, for a process performed by the terminal device and the network device, refer to the descriptions in the foregoing other embodiments.

Refer to FIG. 10. An embodiment of this application provides a communication apparatus 1000. The communication apparatus 1000 can implement a function of the terminal device (or the network device) in the foregoing method embodiments, and therefore can also the achieve beneficial effects of the foregoing method embodiments. In this embodiment of this application, the communication apparatus 1000 may be a terminal device (or a network device), or may be an integrated circuit, an element, or the like, for example, a chip, inside the terminal device (or the network device). In the following embodiments, an example in which the communication apparatus 1000 is the terminal device or the network device is used for description.

In a possible implementation, when the apparatus 1000 is configured to perform the method performed by the terminal device in the foregoing embodiments, the apparatus 1000 includes a processing unit 1001 and a transceiver unit 1002. The transceiver unit 1002 is configured to receive first information, where the first information indicates a first PRACH resource, a time domain resource of the first PRACH resource is located in one or more time domain units used for uplink and downlink communication, the first PRACH resource includes N RO resources, the N RO resources are RO resources occupied by M mapping cycles, each mapping cycle is determined based on an association relationship between L SSBs and the N RO resources, and L, N, and M are all positive integers; and the processing unit 1001 is configured to send a random access preamble (preamble) based on the N RO resources.

In a possible implementation, when the apparatus 1000 is configured to perform the method performed by the network device in the foregoing embodiments, the apparatus 1000 includes a processing unit 1001 and a transceiver unit 1002. The processing unit 1001 is configured to determine first information, where the first information indicates a first physical random access channel PRACH resource, a time domain resource of the first PRACH resource is located in one or more time domain units used for uplink and downlink communication, the first PRACH resource includes N random access occasion RO resources, the N RO resources are RO resources occupied by M mapping cycles, each mapping cycle is determined based on an association relationship between L SSBs and the N RO resources, and L, N, and M are all positive integers; and the transceiver unit 1002 is configured to send the first information.

In a possible implementation, when the apparatus 1000 is configured to perform the method performed by the terminal device in the foregoing embodiments, the apparatus 1000 includes a processing unit 1001 and a transceiver unit 1002. The transceiver unit 1002 is configured to receive configuration information of a fourth PRACH resource, where a time domain resource of the fourth PRACH resource is located in one or more time domain units used for uplink communication; the processing unit 1001 is configured to determine the fourth PRACH resource based on the configuration information; and the transceiver unit 1002 is further configured to receive second information, where the second information indicates an association relationship between an SSB and a first random access preamble set transmitted on the fourth PRACH resource, a random access preamble included in the first random access preamble set is used for random access of a first terminal device, and the first terminal device is a terminal device that does not support communication on the first PRACH resource. A random access preamble included in a second random access preamble set transmitted on the fourth PRACH resource is used for random access of a second terminal device, the second terminal device is a terminal device that supports communication on the first PRACH resource, and at least one random access preamble included in the second random access preamble set is different from at least one random access preamble included in the first random access preamble set.

In a possible implementation, when the apparatus 1000 is configured to perform the method performed by the network device in the foregoing embodiments, the apparatus 1000 includes a processing unit 1001 and a transceiver unit 1002. The processing unit 1001 is configured to determine configuration information of a fourth PRACH resource and second information; the transceiver unit 1002 is configured to send the configuration information of the fourth PRACH resource, where a time domain resource of the fourth PRACH resource is located in one or more time domain units used for uplink communication; and the transceiver unit 1002 is further configured to send the second information, where the second information indicates an association relationship between an SSB and a first random access preamble set transmitted on the fourth PRACH resource, a random access preamble included in the first random access preamble set is used for random access of a first terminal device, and the first terminal device is a terminal device that does not support communication on the first PRACH resource. A random access preamble included in a second random access preamble set transmitted on the fourth PRACH resource is used for random access of a second terminal device, the second terminal device is a terminal device that supports communication on the first PRACH resource, and at least one random access preamble included in the second random access preamble set is different from at least one random access preamble included in the first random access preamble set.

It should be noted that for details of content such as an information execution process of the unit of the communication apparatus 1000, refer to the descriptions in the foregoing method embodiments of this application. Details are not described herein again.

FIG. 11 is another diagram of a structure of a communication apparatus 1100 according to this application. The communication apparatus 1100 includes at least a logic circuit 1101 and an input/output interface 1102. The communication apparatus 1100 may be a chip or an integrated circuit.

The transceiver unit 1002 shown in FIG. 10 may be a communication interface. The communication interface may be the input/output interface 1102 in FIG. 11, and the input/output interface 1102 may include an input interface and an output interface. Alternatively, the communication interface may be a transceiver circuit, and the transceiver circuit may include an input interface circuit and an output interface circuit.

Optionally, the input/output interface 1102 is configured to receive first information, where the first information indicates a first PRACH resource, a time domain resource of the first PRACH resource is located in one or more time domain units used for uplink and downlink communication, the first PRACH resource includes N RO resources, the N RO resources are RO resources occupied by M mapping cycles, each mapping cycle is determined based on an association relationship between L SSBs and the N RO resources, and L, N, and M are all positive integers; and the logic circuit 1101 is configured to send a random access preamble (preamble) based on the N RO resources. The logic circuit 1101 and the input/output interface 1102 may further perform another step performed by the terminal device in the foregoing embodiments, and achieve corresponding beneficial effects. Details are not described herein again.

Optionally, the logic circuit 1101 is configured to determine first information, where the first information indicates a first physical random access channel PRACH resource, a time domain resource of the first PRACH resource is located in one or more time domain units used for uplink and downlink communication, the first PRACH resource includes N random access occasion RO resources, the N RO resources are RO resources occupied by M mapping cycles, each mapping cycle is determined based on an association relationship between L SSBs and the N RO resources, and L, N, and M are all positive integers; and the input/output interface 1102 is configured to send the first information. The logic circuit 1101 and the input/output interface 1102 may further perform another step performed by the network device in the foregoing embodiments, and achieve corresponding beneficial effects. Details are not described herein again.

Optionally, the input/output interface 1102 is configured to receive configuration information of a fourth PRACH resource, where a time domain resource of the fourth PRACH resource is located in one or more time domain units used for uplink communication; the logic circuit 1101 is configured to determine the fourth PRACH resource based on the configuration information; and the input/output interface 1102 is further configured to receive second information, where the second information indicates an association relationship between an SSB and a first random access preamble set transmitted on the fourth PRACH resource, a random access preamble included in the first random access preamble set is used for random access of a first terminal device, and the first terminal device is a terminal device that does not support communication on the first PRACH resource. A random access preamble included in a second random access preamble set transmitted on the fourth PRACH resource is used for random access of a second terminal device, the second terminal device is a terminal device that supports communication on the first PRACH resource, and at least one random access preamble included in the second random access preamble set is different from at least one random access preamble included in the first random access preamble set. The logic circuit 1101 and the input/output interface 1102 may further perform another step performed by the terminal device in any one of the foregoing embodiments, and achieve corresponding beneficial effects. Details are not described herein again.

Optionally, the logic circuit 1101 is configured to determine configuration information of a fourth PRACH resource and second information; the input/output interface 1102 is configured to send the configuration information of the fourth PRACH resource, where a time domain resource of the fourth PRACH resource is located in one or more time domain units used for uplink communication; and the input/output interface 1102 is further configured to send the second information, where the second information indicates an association relationship between an SSB and a first random access preamble set transmitted on the fourth PRACH resource, a random access preamble included in the first random access preamble set is used for random access of a first terminal device, and the first terminal device is a terminal device that does not support communication on the first PRACH resource. A random access preamble included in a second random access preamble set transmitted on the fourth PRACH resource is used for random access of a second terminal device, the second terminal device is a terminal device that supports communication on the first PRACH resource, and at least one random access preamble included in the second random access preamble set is different from at least one random access preamble included in the first random access preamble set. The logic circuit 1101 and the input/output interface 1102 may further perform another step performed by the network device in the foregoing embodiments, and achieve corresponding beneficial effects. Details are not described herein again.

In a possible implementation, the processing unit 1001 shown in FIG. 10 may be the logic circuit 1101 in FIG. 11.

Optionally, the logic circuit 1101 may be a processing apparatus, and some or all of functions of the processing apparatus may be implemented by software. Some or all functions of the processing apparatus may be implemented through software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field programmable gate arrays (field programmable gate arrays, FPGA), an application specific integrated chip (application specific integrated circuit, ASIC), a system on chip (system on chip, SoC), a central processing unit (central processing unit, CPU), a network processor (network processor, NP), a digital signal processing circuit (digital signal processor, DSP), a microcontroller (microcontroller unit, MCU), a programmable controller (programmable logic device, PLD) or another integrated chip, or any combination of the foregoing chips or processors.

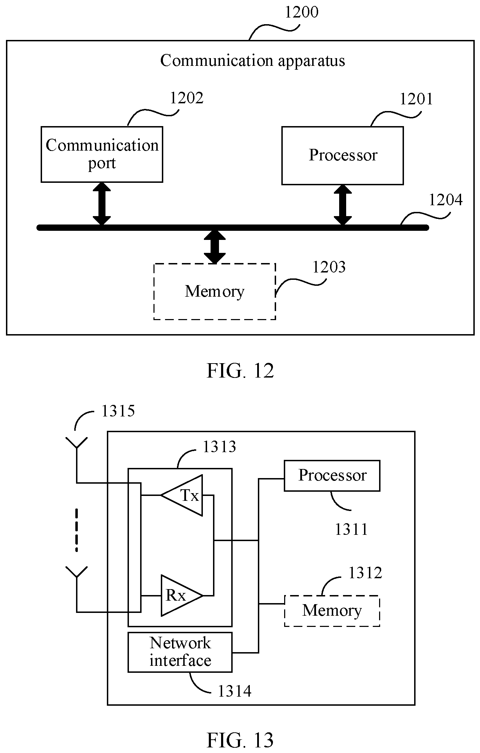

FIG. 12 shows a communication apparatus 1200 in the foregoing embodiments according to an embodiment of this application. The communication apparatus 1200 may be specifically a communication apparatus serving as the terminal device in the foregoing embodiments. An example shown in FIG. 12 is that the terminal device is implemented through a terminal device (or a component in the terminal device).

In a possible diagram of a logical structure of the communication apparatus 1200, the communication apparatus 1200 may include but is not limited to at least one processor 1201 and a communication port 1202.

Further, optionally, the apparatus may include at least one of a memory 1203 and a bus 1204. In this embodiment of this application, the at least one processor 1201 is configured to perform control processing on an action of the communication apparatus 1200.

In addition, the processor 1201 may be a central processing unit, a general-purpose processor, a digital signal processor, an application specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments, and details are not described herein again.

It should be noted that the communication apparatus 1200 shown in FIG. 12 may be specifically configured to implement steps implemented by the terminal device in the foregoing method embodiments, and achieve technical effect corresponding to the terminal device. For a specific implementation of the communication apparatus shown in FIG. 12, refer to the descriptions in the foregoing method embodiments. Details are not enumerated herein again.

FIG. 13 is a diagram of a structure of a communication apparatus 1300 in the foregoing embodiments according to an embodiment of this application. The communication apparatus 1300 may be specifically a communication apparatus serving as the network device in the foregoing embodiments. An example shown in FIG. 13 is that the network device is implemented through a network device (or a component in the network device). For a structure of the communication apparatus, refer to the structure shown in FIG. 13.

The communication apparatus 1300 includes at least one processor 1311 and at least one network interface 1314. Further, optionally, the communication apparatus includes at least one memory 1312, at least one transceiver 1313, and one or more antennas 1315. The processor 1311, the memory 1312, the transceiver 1313, and the network interface 1314 are connected, for example, through a bus. In this embodiment of this application, the connection may include various interfaces, transmission lines, buses, or the like. This is not limited in this embodiment. The antenna 1315 is connected to the transceiver 1313. The network interface 1314 is configured to enable the communication apparatus to communicate with another communication device through a communication link. For example, the network interface 1314 may include a network interface between the communication apparatus and a core network device, for example, an S1 interface. The network interface may include a network interface between the communication apparatus and another communication apparatus (for example, another network device or core network device), for example, an X2 interface or an Xn interface.

The processor 1311 is mainly configured to: process a communication protocol and communication data, control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data. The central processing unit is mainly configured to control the entire terminal device, execute the software program, and process the data of the software program. The processor 1311 in FIG. 13 may integrate functions of the baseband processor and the central processing unit. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1312 may exist independently, and is connected to the processor 1311. Optionally, the memory 1312 and the processor 1311 may be integrated together, for example, integrated into one chip. The memory 1312 can store program code for performing the technical solutions in embodiments of this application, and execution is controlled by the processor 1311. Various types of executed computer program code may also be considered as a driver of the processor 1311.

FIG. 13 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1313 may be configured to support receiving or sending of a radio frequency signal between the communication apparatus and the terminal, and the transceiver 1313 may be connected to the antenna 1315. The transceiver 1313 includes a transmitter machine Tx and a receiver machine Rx. Specifically, the one or more antennas 1315 may receive a radio frequency signal. The receiver machine Rx of the transceiver 1313 is configured to receive the radio frequency signal from the antenna, convert the radio frequency signal into a digital baseband signal or a digital intermediate frequency signal, and provide the digital baseband signal or the digital intermediate frequency signal for the processor 1311, so that the processor 1311 performs further processing on the digital baseband signal or the digital intermediate frequency signal, for example, performs demodulation processing and decoding processing. In addition, the transmitter machine Tx of the transceiver 1313 is further configured to: receive a modulated digital baseband signal or digital intermediate frequency signal from the processor 1311, convert the modulated digital baseband signal or digital intermediate frequency signal into a radio frequency signal, and send the radio frequency signal through the one or more antennas 1315. Specifically, the receiver machine Rx may selectively perform one-level or multi-level down-conversion processing and analog-to-digital conversion processing on the radio frequency signal, to obtain the digital baseband signal or the digital intermediate frequency signal. A sequence of the down-conversion processing and the analog-to-digital conversion processing is adjustable. The transmitter machine Tx may selectively perform one-level or multi-level up frequency mixing processing and digital-to-analog conversion on the modulated digital baseband signal or digital intermediate frequency signal, to obtain the radio frequency signal. A sequence of the up frequency mixing processing and the digital-to-analog conversion is adjustable. The digital baseband signal and the digital intermediate frequency signal may be collectively referred to as a digital signal.

The transceiver 1313 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. That is, the transceiver unit includes the receiving unit and the sending unit. The receiving unit may also be referred to as a receiver machine, an input port, a receiving circuit, or the like. The sending unit may be referred to as a transmitter machine, a transmitter, a transmitting circuit, or the like.

It should be noted that the communication apparatus 1300 shown in FIG. 13 may be specifically configured to implement steps implemented by the network device in the foregoing method embodiments, and achieve technical effect corresponding to the network device. For a specific implementation of the communication apparatus 1300 shown in FIG. 13, refer to the descriptions in the foregoing method embodiments. Details are not enumerated herein again.

An embodiment of this application further provides a computer-readable storage medium, configured to store one or more computer-executable instructions. When the computer-executable instructions are executed by a processor, the processor performs the method according to the possible implementations of the communication apparatus (for example, the terminal device or the network device) in the foregoing embodiments.

An embodiment of this application further provides a computer program product (or referred to as a computer program). When the computer program product is executed by a processor, the processor performs the method according to the possible implementations of the communication apparatus (for example, the terminal device or the network device).

An embodiment of this application further provides a chip system. The chip system includes at least one processor, configured to support a communication apparatus in implementing the functions in the foregoing possible implementations of the communication apparatus. Optionally, the chip system further includes an interface circuit, and the interface circuit provides program instructions and/or data for the at least one processor. In a possible design, the chip system may further include a memory, and the memory is configured to store program instructions and data that are necessary for the communication apparatus. The chip system may include a chip, or may include a chip and another discrete component. The communication apparatus may be specifically the terminal device or the network device in the foregoing method embodiments.

An embodiment of this application further provides a communication system. An architecture of the network system includes the terminal device and the network device in any one of the foregoing embodiments.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions of this application essentially, or the part makes a contribution, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A communication method, comprising:
receiving first information, wherein the first information indicates a first physical random access channel PRACH resource, a time domain resource of the first PRACH resource is located in one or more time domain units used for uplink and downlink communication, the first PRACH resource comprises N random access occasion RO resources, the N RO resources are RO resources occupied by M mapping cycles, each mapping cycle is determined based on an association relationship between L synchronization signal/physical broadcast channel blocks SSBs and the N RO resources, and L, N, and M are all positive integers; and
sending a random access preamble based on the N RO resources.

2. The method according to claim 1, wherein the resource used for uplink and downlink communication comprises a subband used for uplink transmission and a subband used for downlink transmission, and the subband used for uplink transmission and the subband used for downlink transmission are located on a same component carrier.

3. The method according to claim 1 or 2, wherein the first PRACH resource further comprises K RO resources, K is an integer, and the K RO resources meet at least one of the following:
the K RO resources are not used for random access;
the K RO resources are not used to carry a random access preamble; or
the K RO resources are invalid RO resources.

4. The method according to claim 3, wherein K is an integer less than $\left⌈N/M\right⌉ , \left⌈N/M\right⌉$ represents rounding up N/M, a quantity of RO resources comprised in the first PRACH resource is Z, and Z satisfies: $Z = N + K .$

5. The method according to any one of claims 1 to 4, wherein
a time domain resource of a second PRACH resource following the time domain resource occupied by the first PRACH resource is located in one or more time domain units used for uplink communication, the second PRACH resource comprises P RO resources, and P is a positive integer; and/or
a time domain resource of a third PRACH resource preceding the time domain resource occupied by the first PRACH resource is located in one or more time domain units used for uplink communication, the third PRACH resource comprises Q RO resources, and Q is a positive integer; and
the sending the random access preamble based on the N RO resources comprises:
sending the random access preamble based on the N RO resources and at least one of the P RO resources and the Q RO resources, wherein in a time domain resource, an SSB index associated with a last RO resource in the N RO resources and an SSB index associated with a 1^{st} RO resource in the P RO resources are consecutive; and/or in a time domain resource, an SSB index associated with a 1^{st} RO resource in the N RO resources and an SSB index associated with a last RO resource in the Q RO resources are consecutive.

6. The method according to claims 1 to 4, wherein
a time domain resource of a second PRACH resource following the time domain resource occupied by the first PRACH resource is located in one or more time domain units used for uplink communication; the second PRACH resource comprises P RO resources; P is a positive integer; the second PRACH resource is not used for random access of a second terminal device, or the second PRACH resource is not used to carry a random access preamble of the second terminal device; and the second terminal device is a device that supports communication on a time domain resource used for uplink and downlink communication; and/or
a time domain resource of a third PRACH resource preceding the time domain resource occupied by the first PRACH resource is located in one or more time domain units used for uplink communication; the third PRACH resource comprises Q RO resources; Q is a positive integer; and the third PRACH resource is not used for the random access of the second terminal device, or the third PRACH resource is not used to carry the random access preamble of the second terminal device.

7. The method according to any one of claims 1 to 6, wherein a first association period and a second association period are the same; and
the first association period is an association period between an SSB and an RO resource in one or more time domain units used for uplink communication, and the first association period is an association period between an SSB and an RO resource in one or more time domain units used for uplink and downlink communication.

8. The method according to any one of claims 1 to 7, wherein a first association pattern period and a second association pattern period are the same; and
the first association pattern period is an association pattern period between an SSB and an RO resource in one or more time domain units used for uplink communication, and the second association pattern period is an association pattern period between an SSB and an RO resource in one or more time domain units used for uplink and downlink communication.

9. The method according to any one of claims 1 to 8, wherein the method further comprises:
receiving second information, wherein the second information indicates an association relationship between an SSB and a first random access preamble set transmitted on a fourth PRACH resource, a time domain resource of the fourth PRACH resource is located in one or more time domain units used for uplink communication, the first random access preamble set is used for random access of a first terminal device, and the first terminal device is a terminal device that does not support communication on the first PRACH resource, wherein
a random access preamble comprised in a second random access preamble set transmitted on the fourth PRACH resource is used for the random access of the second terminal device, the second terminal device is a terminal device that supports communication on the first PRACH resource, and at least one random access preamble comprised in the second random access preamble set is different from at least one random access preamble comprised in the first random access preamble set.

10. The method according to claim 9, wherein the method further comprises:
receiving third information, wherein the third information indicates an association relationship between the second random access preamble set and an SSB; or
an association relationship between the second random access preamble set and an SSB is predefined.

11. The method according to claim 9 or 10, wherein the method further comprises:
receiving fourth information, wherein the fourth information indicates an association relationship between an SSB and a third random access preamble set carried on the first PRACH resource, and a random access preamble comprised in the third random access preamble set is used for the random access of the second terminal device; or
an association relationship between the third random access preamble set and an SSB is predefined.

12. The method according to any one of claims 9 to 11, wherein the method further comprises:
receiving fifth information, wherein the fifth information indicates a quantity X of random access preambles corresponding to each of one or more RO resources comprised in the fourth PRACH resource, and X meets any one of the following:
X is greater than or equal to a sum of a quantity of random access preambles comprised in the first random access preamble set and a quantity of random access preambles comprised in the second random access preamble set;
X is greater than or equal to a sum of a quantity of random access preambles corresponding to a first SSB set and a quantity of random access preambles corresponding to a second SSB set, wherein the first SSB set is a set of SSBs of the first terminal device on each RO resource, and the second SSB set is a set of SSBs of the second terminal device on each RO resource; and
X is greater than or equal to a quantity of random access preambles corresponding to a third SSB set, wherein the third SSB set is a union set of the first SSB set and the second SSB set.

13. A communication method, comprising:
determining first information, wherein the first information indicates a first physical random access channel PRACH resource, a time domain resource of the first PRACH resource is located in one or more time domain units used for uplink and downlink communication, the first PRACH resource comprises N random access occasion RO resources, the N RO resources are RO resources occupied by M mapping cycles, each mapping cycle is determined based on an association relationship between L synchronization signal/physical broadcast channel blocks SSBs and the N RO resources, and L, N, and M are all positive integers; and
sending the first information.

14. The method according to claim 13, wherein the resource used for uplink and downlink communication comprises a subband used for uplink transmission and a subband used for downlink transmission, and the subband used for uplink transmission and the subband used for downlink transmission are located on a same component carrier.

15. The method according to claim 13 or 14, wherein the first PRACH resource further comprises K RO resources, K is an integer, and the K RO resources meet at least one of the following:
the K RO resources are not used for random access;
the K RO resources are not used to carry a random access preamble; or
the K RO resources are invalid RO resources.

16. The method according to claim 15, wherein K is an integer less than $\left⌈N/M\right⌉$, $\left⌈N/M\right⌉$ represents rounding up N/M, a quantity of RO resources comprised in the first PRACH resource is Z, and Z satisfies: $Z = N + K .$

17. The method according to any one of claims 13 to 16, wherein
a time domain resource of a second PRACH resource following the time domain resource occupied by the first PRACH resource is located in one or more time domain units used for uplink communication, the second PRACH resource comprises P RO resources, and P is a positive integer; and/or
a time domain resource of a third PRACH resource preceding the time domain resource occupied by the first PRACH resource is located in one or more time domain units used for uplink communication, the third PRACH resource comprises Q RO resources, and Q is a positive integer, wherein
the N RO resources and at least one of the P RO resources and the Q RO resources are used to send a random access preamble; and in a time domain resource, an SSB index associated with a last RO resource in the N RO resources and an SSB index associated with a 1^{st} RO resource in the P RO resources are consecutive; and/or in a time domain resource, an SSB index associated with a 1^{st} RO resource in the N RO resources and an SSB index associated with a last RO resource in the Q RO resources are consecutive.

18. The method according to claims 13 to 17, wherein
a time domain resource of a second PRACH resource following the time domain resource occupied by the first PRACH resource is located in one or more time domain units used for uplink communication; the second PRACH resource comprises P RO resources; P is a positive integer; the second PRACH resource is not used for random access of a second terminal device, or the second PRACH resource is not used to carry a random access preamble of the second terminal device; and the second terminal device is a device that supports communication on a time domain resource used for uplink and downlink communication; and/or
a time domain resource of a third PRACH resource preceding the time domain resource occupied by the first PRACH resource is located in one or more time domain units used for uplink communication; the third PRACH resource comprises Q RO resources; Q is a positive integer; and the third PRACH resource is not used for the random access of the second terminal device, or the third PRACH resource is not used to carry the random access preamble of the second terminal device.

19. The method according to any one of claims 13 to 18, wherein a first association period and a second association period are the same; and
the first association period is an association period between an SSB and an RO resource in one or more time domain units used for uplink communication, and the first association period is an association period between an SSB and an RO resource in one or more time domain units used for uplink and downlink communication.

20. The method according to any one of claims 13 to 19, wherein a first association pattern period and a second association pattern period are the same; and
the first association pattern period is an association pattern period between an SSB and an RO resource in one or more time domain units used for uplink communication, and the second association pattern period is an association pattern period between an SSB and an RO resource in one or more time domain units used for uplink and downlink communication.

21. The method according to any one of claims 13 to 20, wherein the method further comprises:
sending second information, wherein the second information indicates an association relationship between an SSB and a first random access preamble set transmitted on a fourth PRACH resource, a time domain resource of the fourth PRACH resource is located in one or more time domain units used for uplink communication, the first random access preamble set is used for random access of a first terminal device, and the first terminal device is a terminal device that does not support communication on the first PRACH resource, wherein
a random access preamble comprised in a second random access preamble set transmitted on the fourth PRACH resource is used for the random access of the second terminal device, the second terminal device is a terminal device that supports communication on the first PRACH resource, and at least one random access preamble comprised in the second random access preamble set is different from at least one random access preamble comprised in the first random access preamble set.

22. The method according to claim 21, wherein the method further comprises:
sending third information, wherein the third information indicates an association relationship between the second random access preamble set and an SSB; or
an association relationship between the second random access preamble set and an SSB is predefined.

23. The method according to claim 21 or 22, wherein the method further comprises:
sending fourth information, wherein the fourth information indicates an association relationship between an SSB and a third random access preamble set carried on the first PRACH resource, and a random access preamble comprised in the third random access preamble set is used for the random access of the second terminal device; or
an association relationship between the third random access preamble set and an SSB is predefined.

24. The method according to any one of claims 21 to 23, wherein the method further comprises:
sending fifth information, wherein the fifth information indicates a quantity X of random access preambles corresponding to each of one or more RO resources comprised in the fourth PRACH resource, and X meets any one of the following:
X is greater than or equal to a sum of a quantity of random access preambles comprised in the first random access preamble set and a quantity of random access preambles comprised in the second random access preamble set;
X is greater than or equal to a sum of a quantity of random access preambles corresponding to a first SSB set and a quantity of random access preambles corresponding to a second SSB set, wherein the first SSB set is a set of SSBs of the first terminal device on each RO resource, and the second SSB set is a set of SSBs of the second terminal device on each RO resource; and
X is greater than or equal to a quantity of random access preambles corresponding to a third SSB set, wherein the third SSB set is a union set of the first SSB set and the second SSB set.

25. A communication method, comprising:
receiving configuration information of a fourth PRACH resource, wherein a time domain resource of the fourth PRACH resource is located in one or more time domain units used for uplink communication; and
receiving second information, wherein the second information indicates an association relationship between an SSB and a first random access preamble set transmitted on the fourth PRACH resource, a random access preamble comprised in the first random access preamble set is used for random access of a first terminal device, and the first terminal device is a terminal device that does not support communication on the first PRACH resource, wherein
a random access preamble comprised in a second random access preamble set transmitted on the fourth PRACH resource is used for random access of a second terminal device, the second terminal device is a terminal device that supports communication on the first PRACH resource, and at least one random access preamble comprised in the second random access preamble set is different from at least one random access preamble comprised in the first random access preamble set.

26. The method according to claim 25, wherein the method further comprises:
receiving third information, wherein the third information indicates an association relationship between the second random access preamble set and an SSB; or
an association relationship between the second random access preamble set and an SSB is predefined.

27. The method according to claim 25 or 26, wherein the method further comprises:
receiving fourth information, wherein the fourth information indicates an association relationship between an SSB and a third random access preamble set carried on the first PRACH resource, a time domain resource of the first PRACH resource is located in one or more time domain units used for uplink and downlink communication, and a random access preamble comprised in the third random access preamble set is used for random access of a terminal device that performs communication on the first PRACH resource; or
an association relationship between the third random access preamble set and an SSB is predefined.

28. The method according to any one of claims 25 to 27, wherein the method further comprises:
receiving fifth information, wherein the fifth information indicates a quantity X of random access preambles corresponding to each of one or more RO resources comprised in the fourth PRACH resource, and X meets any one of the following:
X is greater than or equal to a sum of a quantity of random access preambles comprised in the first random access preamble set and a quantity of random access preambles comprised in the second random access preamble set;
X is greater than or equal to a sum of a quantity of random access preambles corresponding to a first SSB set and a quantity of random access preambles corresponding to a second SSB set, wherein the first SSB set is a set of SSBs of the first terminal device on each RO resource, and the second SSB set is a set of SSBs of the second terminal device on each RO resource; and
X is greater than or equal to a quantity of random access preambles corresponding to a third SSB set, wherein the third SSB set is a union set of the first SSB set and the second SSB set.

29. A communication method, comprising:
sending configuration information of a fourth PRACH resource, wherein a time domain resource of the fourth PRACH resource is located in one or more time domain units used for uplink communication; and
sending second information, wherein the second information indicates an association relationship between an SSB and a first random access preamble set transmitted on the fourth PRACH resource, a random access preamble comprised in the first random access preamble set is used for random access of a first terminal device, and the first terminal device is a terminal device that does not support communication on the first PRACH resource, wherein
a random access preamble comprised in a second random access preamble set transmitted on the fourth PRACH resource is used for random access of a second terminal device, the second terminal device is a terminal device that supports communication on the first PRACH resource, and at least one random access preamble comprised in the second random access preamble set is different from at least one random access preamble comprised in the first random access preamble set.

30. The method according to claim 29, wherein the method further comprises:
sending third information, wherein the third information indicates an association relationship between the second random access preamble set and an SSB; or
an association relationship between the second random access preamble set and an SSB is predefined.

31. The method according to claim 29 or 30, wherein the method further comprises:
sending fourth information, wherein the fourth information indicates an association relationship between an SSB and a third random access preamble set carried on the first PRACH resource, a time domain resource of the first PRACH resource is located in one or more time domain units used for uplink and downlink communication, and a random access preamble comprised in the third random access preamble set is used for random access of a terminal device that performs communication on the first PRACH resource; or
an association relationship between the third random access preamble set and an SSB is predefined.

32. The method according to any one of claims 29 to 31, wherein the method further comprises:
sending fifth information, wherein the fifth information indicates a quantity X of random access preambles corresponding to each of one or more RO resources comprised in the fourth PRACH resource, and X meets any one of the following:
X is greater than or equal to a sum of a quantity of random access preambles comprised in the first random access preamble set and a quantity of random access preambles comprised in the second random access preamble set;
X is greater than or equal to a sum of a quantity of random access preambles corresponding to a first SSB set and a quantity of random access preambles corresponding to a second SSB set, wherein the first SSB set is a set of SSBs of the first terminal device on each RO resource, and the second SSB set is a set of SSBs of the second terminal device on each RO resource; and
X is greater than or equal to a quantity of random access preambles corresponding to a third SSB set, wherein the third SSB set is a union set of the first SSB set and the second SSB set.

33. A communication apparatus, comprising a module configured to perform the method according to any one of claims 1 to 32.

34. A communication apparatus, comprising at least one processor, wherein the at least one processor is configured to perform the method according to any one of claims 1 to 32.

35. The communication apparatus according to claim 34, wherein the communication apparatus is a chip or a chip system.

36. A readable storage medium, wherein the storage medium stores a computer program or instructions, and when the computer program or the instructions are executed by a communication apparatus, the method according to any one of claims 1 to 32 is implemented.

37. A computer program product, comprising a computer program or instructions, wherein when the computer program or the instructions are executed by a communication apparatus, the method according to any one of claims 1 to 32 is implemented.
